# EUROPEAN PATENT APPLICATION

(11) **EP 4 679 602 A1**
(43) Date of publication of application: **14.01.2026**
(21) Application number: 24889084.0
(22) Date of filing: 05.11.2024
(51) Int. Cl.: H01M 50/30, H01M 50/342, H01M 50/317, H01M 10/6568, H01M 10/613

(54) **BATTERY ASSEMBLY AND BATTERY PACK INCLUDING SAME**

(30) Priority: 07.11.2023 KR 20230153058; 04.11.2024 KR 20240154100
(71) Applicant: LG Energy Solution, Ltd., Seoul 07335 (KR)
(72) Inventor: KIM, Dooseung, Daejeon 34122 (KR); UM, Taeki, Daejeon 34122 (KR); JANG, Cheol Han, Daejeon 34122 (KR); LEE, Jung Hoon, Daejeon 34122 (KR)
(74) Representative: Plasseraud IP
(86) International application number: PCT/KR2024/017276
(87) International publication number: WO 2025/100896

(57) **Abstract**

A battery assembly according to certain embodiments of the present disclosure includes: a plurality of battery cells; a frame that houses the plurality of battery cells; an inflow port and an outflow port for circulating a cooling material into the inside of the frame; and a venting unit provided on one surface of the frame and discharging gas inside the frame when the pressure inside the frame is equal to or greater than a specified pressure. The cooling material flowed in through the inflow port directly cools the battery cells and is discharged through the outflow port.

## Description

### [TECHNICAL FIELD]

### Cross-Reference to Related Application(s)

This application claims priority to and the benefit of Korean Patent Application no. KR10-2023-0153058, filed on November 7, 2023, and Korean Patent Application no. KR10-2024-0154100, filed on November 4, 2024, with the Korean Intellectual Property Office, the entire contents of which are incorporated herein by reference.

The present disclosure relates to a battery assembly and a battery pack including the same, and more particularly, to a battery assembly using an immersion cooling system and a battery pack including the same.

### [BACKGROUND]

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. Such a secondary battery is widely used as a novel energy source for enhancing environment friendliness and energy efficiency, in that it has a primary advantage of remarkable reducing the use of fossil fuels, and also generates no by-products resulting from the use of energy.

The types of secondary batteries currently include a lithium ion battery, a lithium polymer battery, a nickel cadmium battery, a nickel hydride battery, a nickel zinc battery, and the like. An operating voltage of the unit secondary battery cell, namely a unit battery cell, is about 2.5V to 4.5V. Therefore, when an output voltage higher than the operating voltage is required, a plurality of battery cells may be connected in series to configure a battery pack. In addition, depending on the charge/discharge capacity required for the battery pack, a plurality of battery cells may also be connected in parallel to configure a battery pack. Thus, the number of battery cells included in the battery pack may be variously set in accordance with the required output voltage or charge/discharge capacity.

Meanwhile, when a plurality of battery cells are connected in series/parallel to configure a battery pack, a common method employs a process of first making a battery assembly including a plurality of battery cells and housing it in a module case to configure a battery module, and then gather one or more battery modules and adding other components thereto to configure a battery pack, or a process of disposing a plurality of battery cells in a pack frame and adding other components thereto to configure a battery pack.

Since these battery cells are constituted of secondary batteries that can be recharged and discharged, such high-output, large-capacity secondary batteries generate a large amount of heat in a charge and discharge process. In this case, the heat emitted from the plurality of battery cells is accumulated in a narrow space, which may raise the temperature of the battery module quickly and severely. In other words, a battery module including a large number of battery cells can obtain high output, but it is not easy to remove heat generated from the battery cells during charging and discharging. When the heat dissipation of the battery cell is not properly performed, deterioration of the battery cells is accelerated, the lifetime is shortened, and the possibility of explosion or ignition increases.

Moreover, in the case of a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in any one of the battery cells can easily propagate to adjacent battery cells, which may eventually lead to ignition or explosion of the battery pack itself.

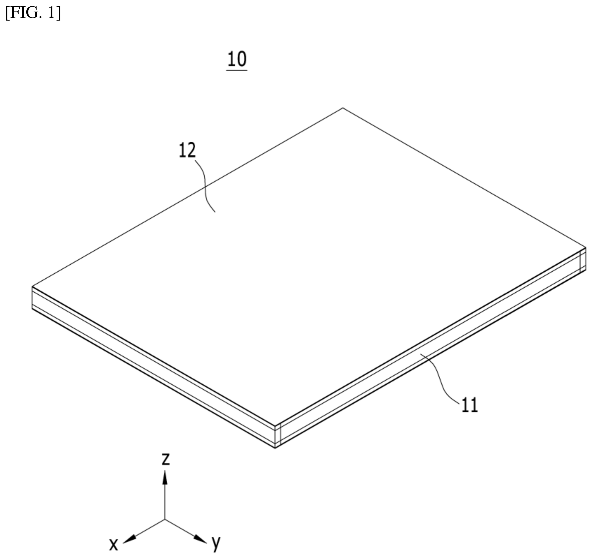

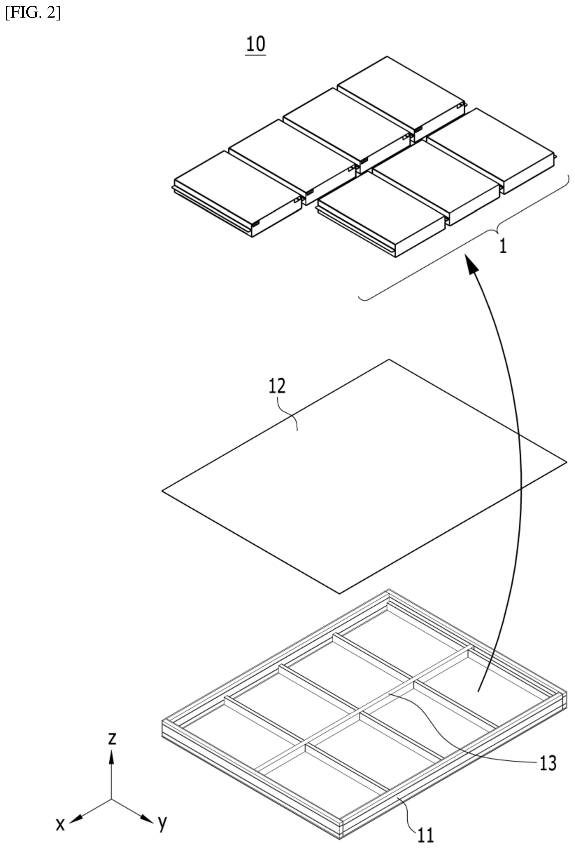

FIG. 1 is a perspective view showing a conventional battery pack. FIG. 2 is an exploded perspective view of the battery pack of FIG. 1.

Referring to FIGS. 1 and 2, a conventional battery pack 10 may include a lower pack frame 11 on which a plurality of battery assemblies 1 are mounted, an upper pack frame 12 located on an upper part of the battery assembly 1, and an internal beam 13 that partitions the position where the battery assembly 1 is mounted within the battery pack 10.

In this way, when a battery assembly 1 is mounted in a battery pack 10, the energy density of the battery pack 10 decreases due to the internal beam 13 that partitions the battery assemblies 1. Thus, there is a problem in that a larger number of battery packs 10 have to be installed in order to satisfy the efficiency required in a device or the like. In addition, there is a limit to the number of battery packs 10 that could be installed in a device due to the weight of the battery pack 10. Therefore, in order to reduce the weight of the battery pack 10 and at the same time increase the energy density of the battery pack 10, there is a need to mount a larger number of battery assemblies 1 in the battery pack 10.

Conventionally, the battery assembly 1 has adopted a bottom cooling or side cooling system in which a heat sink is mounted in the module case of the battery assembly 1 to make cooling.

However, in the case of battery modules using such a cooling system, heat generated in the battery cells is transferred to the heat sink on one side of the module case and cooled, so that a heat transfer path is not easily provided on the other side of the module case. Thereby, they have a limitation that the temperature difference between one end and the other end of the battery cell assembly is deepened, or the cooling efficiency is not satisfactory as a whole. If the temperature deviation is not resolved, it will cause safety and durability issues for the battery module. If the cooling efficiency is not good, it may accelerate deterioration of the battery cells, or it may not be possible to quickly address when thermal runaway occurs in some battery cells, which leads to thermal runaway propagation. This may lead to disasters such as ignition and explosion of a battery module or a battery pack containing the same, which may cause not only property damage but also safety problems.

In order to solve these problems, it has been proposed to use a system in which the inside of the battery pack is filled with cooling water or insulating fluid to directly cool the battery cells, without using bottom cooling or side cooling. That is, in order to effectively cool a high-capacity battery pack, an immersion cooling system has been used in which a cooling material directly cools the battery cells inside the battery pack.

Meanwhile, an important item required in the battery field is thermal propagation control. As shown in FIGS. 1 and 2, a conventional battery pack 10 is configured to house a plurality of battery assemblies 1. Therefore, when a thermal runaway phenomenon occurs in at least one battery cell included in a plurality of battery assemblies 1, gas, particles or the like are generated. The gas is in a very high temperature state, and the particles may be conductive particles. In order to discharge such gas and particles to the outside, a venting unit may be provided in the battery module or battery pack. The venting unit discharges the generated gas and particles, thereby capable of blocking thermal propagation that thermal propagation to other battery cells or other battery assemblies 1.

However, since the immersion cooling system cools the battery cells while bring the cooling material into direct contact with the battery cells, the cooling material may affect the operation of the venting unit, and gas and particles may not be properly discharged when a thermal runaway phenomenon occurs. In addition, while the cooling material is circulating to cool the battery cells, gas generated due to a thermal event may propagate along the circulation path of the cooling material, thereby causing further damage within the battery pack or vehicle system.

### [DETAILED DESCRIPTION OF THE INVENTION]

### [Technical Problem]

Therefore, it is an object of the present disclosure to provide a battery assembly having a circulation structure of a cooling material in an immersion cooling system, and provided with a venting unit for discharging gas in the event of a thermal runaway phenomenon, and a battery pack including the same.

However, the technical objects to be solved by embodiments of the present disclosure are not limited to the above-mentioned objects, and can be variously expanded within the scope of the technical idea included in the present disclosure.

### [Technical Solution]

According certain aspects of the present disclosure, there is provided a battery assembly comprising: a plurality of battery cells having a vent part configured to discharge venting gas; a frame that is configured such that the plurality of battery cells are seated thereon and is formed with a plurality of vent holes at positions corresponding to the vent part; and a cover member that is configured to cover the vent holes.

The operating pressure of the venting unit may be 1.0 bar or more and 2.5 bar or less.

The venting unit may be provided on one surface of the frame, rather than at least one surface of the frame where the inflow port or the outport port is provided.

The venting unit may be provided on the upper surface of the frame.

The venting unit may be a rupture disc type that ruptures when the inner pressure of the frame is equal to or greater than a specified pressure, a reversible type that opens and closes based on a specified pressure inside the frame, or a valve type that opens when the inner pressure of the frame is equal to or greater than a specified pressure.

The venting unit may be mounted on the upper surface of the frame by a sealant, adhesive, bolt fastening, or welding.

The battery cells may be stacked to form a battery cell stack, and the battery cell stack may be housed in the frame.

The frame may comprise a main frame that covers at least a part including the upper surface of the battery cell stack and is opened on both opposing sides; and end plates that covers each of the opened both sides of the main frame, respectively.

The venting unit may be located on one surface of the main frame.

The inflow port and the outflow port may be located in one of the end plates or each of the end plates.

The battery cell may have a sealing part. At least a part of the sealing part may be provided on the battery cell portion facing the venting unit among the battery cells.

A separation member may be located between the battery cells and the venting unit.

One side space of the separation member may be a space facing the venting unit, and the other side space of the separation member may be a space through which the cooling material flows.

At least a part of the separation member may be ruptured when a pressure equal to or greater than a specified level is applied.

In order to form a portion that ruptures when a pressure equal to or greater than a specified level is applied, a notch, a boundary portion having a thickness difference, or a plurality of holes may be formed in the separation member.

The separation member may comprise a mesh part.

The separation member may comprise an opening part.

The separation member into which the battery cells are fitted may be located inside the frame.

One side space of the separation member may be a space facing the venting unit, and the other side space of the separation member may be a space through which the cooling material flows.

Cooling lines may be connected to the inflow port and the outflow port, respectively, and a venting valve may be disposed on at least one of the cooling lines.

The venting valve may discharge gas from the cooling lines when the pressure of the cooling line reaches a predetermined pressure.

According certain other aspects of the present disclosure, there is provided According to the present disclosure, there is provided a battery pack comprising: at least one battery assembly; a pack frame that houses the battery assembly and has an opened upper part; and a pack cover that covers the opened upper part of the pack frame, wherein the pack cover is spaced apart from the venting unit so as to have a predetermined venting space between the venting unit and the pack cover.

In the venting space, a distance between the venting unit and the pack cover may be 5 mm or more and 25 mm or less.

### [Advantageous Effects]

According to certain aspects of the present disclosure, it is possible to increase the cooling efficiency of the battery assembly and the battery pack including the same by the cooling material that directly cools the battery cells using an immersion cooling system.

In addition, gas and particles generated due to the thermal runaway phenomenon of at least one battery cell can be properly discharged through the venting unit, thereby preventing them from propagating to other battery cells. Accordingly, even if a specific situation such as the thermal runaway phenomenon occurs, the stability of the battery assembly and the battery pack including the same can be improved.

The effects of the present disclosure are not limited to those described above, and other effects that are not described herein may clearly be understood by one of ordinary skill in the art from the claims set forth herein.

### [BRIEF DESCRIPTION OF THE DRAWINGS]

FIG. 1 is a perspective view showing a conventional battery pack.
FIG. 2 is an exploded perspective view of the battery pack of FIG. 1.
FIG. 3 is a perspective view showing a battery assembly according to certain embodiments of the present disclosure.
FIG. 4 is an exploded perspective view of the battery assembly of FIG. 3.
FIG. 5 is a perspective view showing one of the battery cells included in the battery assembly of FIG. 4.
FIG. 6 is a perspective view showing a battery assembly according to certain other embodiments of the present disclosure.
FIG. 7 is an exploded perspective view of components other than the battery cells among the battery assembly of FIG. 6.
FIG. 8 is a cross-sectional view showing a cross section taken along the cutting line A-A' of FIG. 6.
FIG. 9 is an exploded perspective view of a venting unit according to certain embodiments of the present disclosure.
FIG. 10 is a plan view showing a battery assembly according to certain embodiments of the present disclosure.
FIG. 11 is a cross-sectional view showing a cross section taken along the cutting line B-B' of FIG. 10.
FIGS. 12(a) and (b) are diagrams showing a venting valve according to certain embodiments of the present disclosure.
FIGS. 13(a) and (b) are diagrams showing a venting valve according to certain other embodiments of the present disclosure.
FIG. 14 is a diagram showing a filter unit according to certain embodiments of the present disclosure.
FIG. 15 is a diagram showing a filter unit according to a modified embodiment of the present disclosure.
FIG. 16 is a perspective view showing a battery pack according to certain embodiments of the present disclosure.
FIG. 17 is an exploded perspective view of the battery pack of FIG. 16.
FIG. 18 is a cross-sectional view of a battery pack according to certain embodiments of the present disclosure.
FIG. 19 is a schematic diagram for explaining the positions where the venting valve and the filter unit are disposed in the battery pack.
FIG. 20 is a perspective view showing a battery assembly according to certain embodiments of the present disclosure.
FIG. 21 is a cross-sectional view showing a cross section taken along the cutting line C-C' of FIG. 20.
FIG. 22 is a perspective view showing a separation member and battery cells according to certain embodiments of the present disclosure.
FIG. 23 is a diagram showing separation members according to various embodiments of the present disclosure.
FIG. 24 is a perspective view showing a separation member including a mesh part and battery cells according to certain other embodiments of the present disclosure.
FIG. 25 is a perspective view showing a separation member according to certain other embodiments of the present disclosure.
FIG. 26 is a cross-sectional view of a battery assembly to which the separation member of FIG. 25 is applied.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

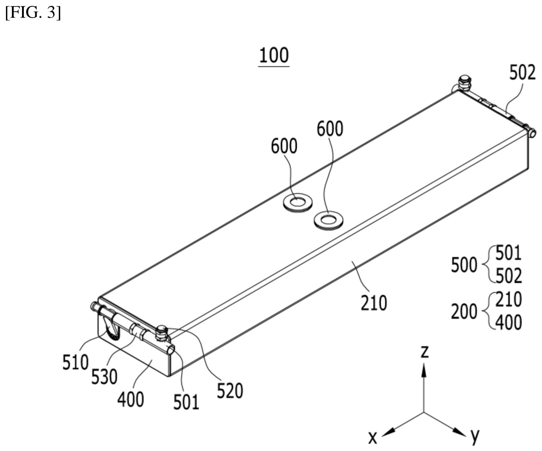

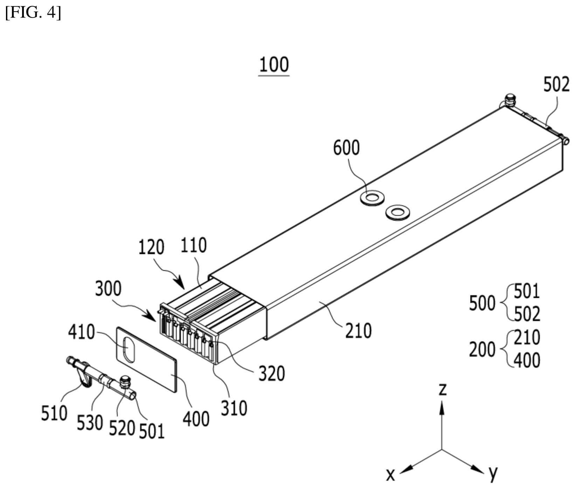

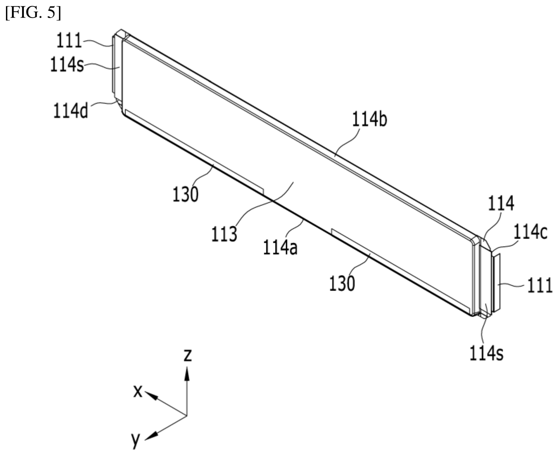

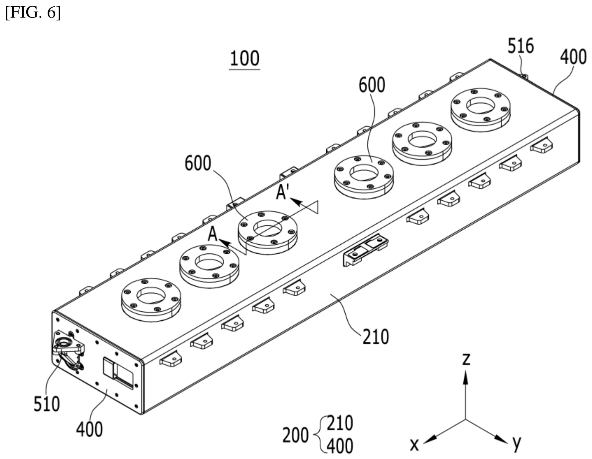

FIG. 3 is a perspective view showing a battery assembly according to one embodiment of the present disclosure. FIG. 4 is an exploded perspective view of the battery assembly of FIG. 3. FIG. 5 is a perspective view showing one of the battery cells included in the battery assembly of FIG. 4. FIG. 6 is a perspective view showing a battery assembly according to certain other embodiments of the present disclosure.

Referring to FIGS. 3 to 6, a battery assembly 100 according to certain embodiments of the present disclosure includes: a plurality of battery cells 110; a frame 200 that houses the plurality of battery cells 110; an inflow port 510 and an outflow port 516 for circulating a cooling material in the inside of the frame 200; and a venting unit 600 that is provided on one surface of the frame 200 and discharges gas inside the frame 200 when the pressure inside the frame 200 is equal to or greater than a specified pressure. The cooling material can make direct contact with the battery cells 110 and circulate inside the frame 200. That is, the battery assembly 100 according to the present embodiments applies an immersion cooling system in which a cooling material directly cools the battery cells. In the present disclosure, at least a part of the battery cell 110 may make contact with the cooling material to make cooling. That is, in certain embodiments, a part of the outer surface of the battery cell 110 may make in contact with the cooling material, and in certain other embodiments, the entire outer surface of the battery cell 110 may make contact with the cooling material.

First, the battery cell 110 according to the present embodiments will be described in detail below. The battery cell 110 according to the present embodiments may be applied to any type of secondary battery, such as a prismatic, cylindrical, or pouch-shaped battery cell. However, the battery cell 110, which is a pouch-shaped battery cell, will be described below by way of example.

First, the battery cell 110 may be a pouch-shaped battery in which an electrode assembly having electrode leads 111 protruding in one direction or both directions is housed in a pouch case 114. However, this is only one example, and a battery cell according to certain other embodiments of the present disclosure may be a prismatic battery. For convenience of explanation, a battery cell 110 that is a pouch-shaped battery will be mainly described below.

The battery cells 110 may have a rectangular sheet shape. The battery cell 110 may be formed by housing an electrode assembly in a pouch case 114 made of a laminate sheet including a resin layer and a metal layer, and then adhering the outer peripheral side of the pouch case 114. As an example, the battery cell 110 may have a structure in which two electrode leads 111 face each other and protrude from one end and the other end of the cell main body 113. As another example, a structure in which all the electrode leads 111 of the battery cells 110 protrude in one direction is also possible. One of the electrode leads 111 is a positive electrode lead, and the other is a negative electrode lead.

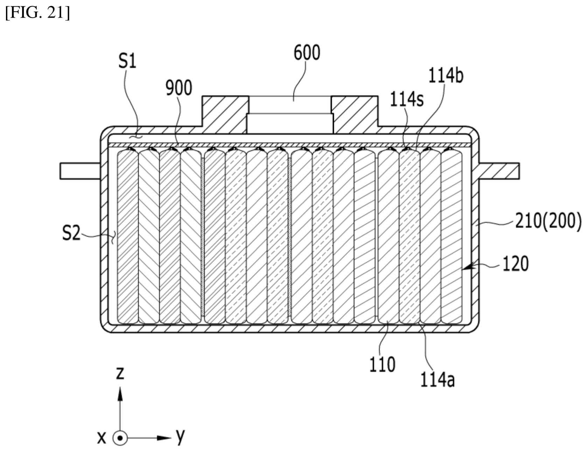

The battery cell 110 may have a sealing part 114s that is a portion adhered to the outer peripheral side of the pouch case 114. Specifically, the battery cell 110 can be produced by adhering both end parts 114c and 114d of a pouch case 114 and one side part 114b connecting them in a state in which an electrode assembly (not shown) is housed in a pouch case 114. In other words, the battery cell 110 according to certain embodiments of the present disclosure has a total of three sealing parts 114s, wherein the sealing parts 114s have a structure that is sealed by a method such as fusion, and the remaining lower end part 114a may be composed of a folding part. That is, the battery cell 110 according to the present embodiments may be a pouch-type secondary battery in which the electrode assembly is housed inside the pouch case 114 and the outer peripheral side of the pouch case 114 is sealed to form a sealing part 114s. In FIG. 5, only a state in which the sealing parts 114s are formed at both end parts 114c and 114d of the pouch case 114 are shown, and the upper end part 114b shows a state where the sealing part is folded to one side after the sealing is completed. This will be described again in FIG. 21.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate(PET) resin or a nylon resin. The metal layer can prevent air, moisture, and the like from flowing into the pouch-type secondary battery. This metal layer may include aluminum(Al). The inner resin layers may be thermally fused to each other by heat and/or pressure applied in a state in which the electrode assembly is embedded. This inner resin layer may include casted polypropylene(CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to provide a sealing part 114s. The pouch case is sealed in this manner, so that the battery cell 110, which is a pouch-type secondary battery, can be produced.

Meanwhile, referring to FIG. 5, the sealing part 114s at both end parts 114c and 114d of the battery cell 110 where the electrode lead 111 protrudes from the battery cell 110 corresponds to the so-called terrace part of the battery cell 110. This terrace part is thinner than the cell body 113 of the battery cell 110.

The battery cells 110 may be configured in a plural number, and the plurality of battery cells 110 may be stacked to form a battery cell stack 120. In the battery cell stack 120, the battery cells 110 may be electrically connected to each other. In particular, as shown in FIG. 4, the plurality of battery cells 110 may be stacked along a direction parallel to the y-axis while standing upright so that one surfaces of the cell bodys 113 (see FIG. 5) faces each other. Thereby, the electrode leads 111 may protrude in a direction perpendicular to the direction in which the battery cells 110 are stacked. That is, in the battery cell 110, one electrode lead 111 may protrude toward the x-axis direction, and the other electrode lead 111 may protrude toward the -x-axis direction. If battery cells have the electrode leads 111 that protrude only in one direction, the electrode leads 111 protrude in the x-axis direction or the -x-axis direction.

As mentioned above, the battery cells 110 are housed in the frame 200. The battery cell stack 120 may be housed in the frame 200. The frame 200 can be for protecting the battery cell stack 120 and electrical components connected thereto from external physical impact. The battery cell stack 120 and the electrical components connected thereto may be housed in the internal space of the frame 200.

The structure of the frame 200 may have various shapes. According to certain embodiments of the present disclosure, the frame 200 may include a main frame 210 that covers at least a part of the upper surface of the battery cell stack 120 and is opened on both sides. Here, the main frame 210 may be in the form of a metal plate in which the upper and lower surfaces (z-axis direction and -z-axis direction) and both side surfaces (y-axis direction and -y-axis direction) are integrated. The main frame 210 may be manufactured by extrusion molding.

However, the structure of the main frame 210 is not limited thereto, and in certain other embodiments, the main frame 210 may have a structure in which a U-shaped frame and an upper plate are coupled. In this case, the U-shaped frame may have a lower surface and both side surfaces extending upward from both ends of the lower surface, and the upper plate may be in the form of a plate. At this time, each frame or plate constituting the U-shaped frame may be manufactured by press molding. Further, the structure of the main frame 210 may be provided in a mono frame or an L-shaped frame structure in addition to a U-shaped frame, and may be provided in various structures that are not described in the above-mentioned embodiments.

The main frame 210 may be provided in the form opened on both sides. The opened both sides of the main frame 210 may be in the +x-axis direction and the -x-axis direction. More specifically, the main frame 210 may be provided in the form opened along the longitudinal direction of the battery cell 110. In this case, the front surface and the rear surface of the battery cell stack 120 may not be covered by the main frame 210. The front surface and the rear surface of the battery cell stack 120 may be covered by the busbar assembly 300, the end plate 400, and the like, through which the front surface and rear surface of the battery cell stack 120 may be protected from external physical impact or the like.

The battery assembly 100 may include busbar assemblies 300 located on one side and the other side of the battery cell stack 120. Specifically, a busbar assembly 300 may be located in both directions in which the electrode leads 111 of the battery cells 110 included in the battery cell stack 120 protrude. The busbar assembly 300 may electrically connect the battery cells 110 constituting the battery cell stack 120 in series or in parallel. The busbar assembly 300 may include a busbar frame 310, a busbar 320, and a terminal busbar, respectively.

The busbar frame 310 may be located on one surface of the battery cell stack 120 to cover one surface of the battery cell stack 120 and at the same time guide the connection between the battery cell stack 120 and an external device. The busbar frame 310 may be located on the front surface (x-axis direction) and the rear surface (-x-axis direction) of the battery cell stack 120.

A busbar 320 may be mounted on the busbar frame 310. Specifically, the busbar 320 may be mounted on the surface on the opposite side from the surface that faces the battery cell stack 120 among the busbar frame 310.

The busbar frame 310 may include an electrically insulating material. The busbar frame 310 may limit contact of the busbar 320 with other parts of the battery cells 110 in addition to the portion joined with the electrode lead 111 (see FIG. 5), thereby preventing an electrical short circuit from occurring.

The busbar 320 may be mounted on one surface of the busbar frame 310, and may be for electrically connecting the battery cell stack 120 or the battery cells 110 to the external device circuit. The busbar 320 is located on the busbar frame 310, and the busbar assembly 300 is covered by the end plate 400 of FIG. 4, so that it can be protected from external impacts, and the like, and deterioration of the durability of the battery due to external moisture and the like can be minimized.

The busbar 320 may be electrically connected to the battery cell stack 120 through the electrode lead of the battery cell 110. Specifically, the electrode lead 111 of the battery cell 110 may be bent after passing through a slit formed in the busbar frame 310 to be connected to the busbar 320. The battery cells 110 constituting the battery cell stack 120 may be connected in series or in parallel by the busbar 320. The connection method between the electrode lead 111 and the busbar 320 is not particularly limited, and welding joints may be applied as an example.

Meanwhile, although not shown in FIGS. 3 and 4, the battery assembly 100 may be equipped with a terminal busbar. The terminal busbar may include a first terminal busbar and a second terminal busbar, and the first terminal busbar and the second terminal busbar may have mutually different polarities.

The terminal busbar may be electrically connected to the busbar 320 or the electrode lead, and may be for electrically connecting one battery assembly 100 to another battery assembly 100. The first terminal busbar and the second terminal busbar may be at least partially exposed to the outside of the end plate 400 in order to connect one battery assembly 100 to another external battery assembly 100, and the end plate 400 may be provided with a terminal busbar opening (not shown) for this purpose. The terminal busbar may be connected to another battery assembly 100 or a BDU (Battery Disconnect Unit) through a portion exposed through the terminal busbar opening, and may form an HV (High voltage) connection therewith.

The frame 200 according to certain embodiments of the present disclosure may include end plates 400 that cover the opened both sides of the main frame 210, respectively. The end plates 400 may be formed to be located on the opened both sides (x-axis direction and -x-axis direction) of the main frame 210 and cover the battery cell stack 120. The end plates 400 may physically protect the battery cell stack 120 and other electrical components from external impact.

The end plate 400 may be formed with a cooling material opening 410 through which cooling material flows in or out. The cooling material opening 410 is an opening provided in the end plate 400 and is a hole penetrating the end plate 400. Thereby, even if the end plate 400 is mounted on the main frame 210, the cooling material may be flowed into the inside of the main frame 210 or may be flowed out from the inside to the exterior of the main frame 210 through the cooling material opening 410. The cooling material opening 410 may be covered by an inflow port 510 or an outflow port 516 described below, and may be connected to the first cooling line 501 or the second cooling line 502, respectively.

The cooling material opening 410 may be a hole formed to extend in the vertical direction (z-axis direction and -z-axis direction). The upper end of the cooling material opening 410 may be located higher than the center based on the height of the battery cell stack 120. The lower end of the cooling material opening 410 may be located lower than the center based on the height of the battery cell stack 120. Specifically, the length from the center of the cooling material opening 410 to the upper end of the cooling material opening 410 may be greater than or equal to the length from the upper edge of the end plate 400 to the upper end of the cooling material opening 410. In addition, the length from the center of the cooling material opening 410 to the lower end of the cooling material opening 410 may be greater than or equal to the length from the lower edge of the end plate 400 to the lower end of the cooling material opening 410. The length from the upper end to the lower end of the cooling material opening 410 may be between 0.5 and 0.9 times the length from the upper edge to the lower edge of the end plate 400.

The cooling material may receive transfer of heat generated from the battery cells 110, the busbar assembly 300, and other electrical components housed inside the frame 200, while being in direct contact with them. The cooling material may be a fluid. The cooling material can be electrically insulated because it is in direct contact with the battery cell stack 120, the busbar assembly 300, and other electrical components inside the battery assembly 100. The cooling material may be an insulating cooling material. As an example, the cooling material may be an insulating fluid. The insulating fluid is commonly called a fluid having insulating properties, and may include insulating oil or silicone-based fluid.

However, the type of the cooling material is not limited by those set forth above. For example, the cooling material should not ignite even when exposed to a high-temperature environment within the battery assembly 100. Therefore, the cooling material may be a non-flammable cooling material.

That is, in the case of the present embodiments, the cooling material can make direct contact with the battery cells 110, the busbar assembly 300, and other electrical components that generate heat in the battery assembly 100 and receive transfer of heat, thereby directly cooling them. Therefore, as compared to a conventional battery assembly that indirectly cools the battery assembly using a heat sink or the like, the battery assembly 100 according to certain embodiments of the present disclosure can improve the cooling efficiency through direct cooling, thereby extending the lifetime of the battery.

Meanwhile, the inflow port 510 and the outflow port 516 may be provided on at least one surface of the frame 200, rather than the one surface of the frame 200 on which the venting unit 600 is provided. The relationship between the positions of the inflow port 510 and the outflow port 516 and the position of the venting unit 600 will be described later.

The inflow port 510 and the outflow port 516 may be located on one of the end plates 400 or on each of the end plates 400. In other words, in certain embodiments, the inflow port 510 and the outflow port 516 may be formed together on one end plate 400, and in certain other embodiments, the inflow port 510 and the outflow port 516 may be formed on each of the end plates 400.

As an example, the inflow port 510 may be formed in any one of the end plates 400 covering one of the opened both sides of the main frame 210, and the outflow port 516 may be formed in the other end plate 400 covering the remaining one of the opened both sides of the main frame 210. The cooling material flowed in through the inflow port 510 may flow along one direction inside the frame 200 and then be discharged through the outflow port 516. That is, in certain embodiments of the present disclosure, the cooling material may flow in one direction from the end plate 400 provided with the inflow port 510 to the end plate 400 provided with the outflow port 516. However, the direction of movement of the cooling material in the present disclosure is not limited to the one direction, and may be variously modified. The inflow port 510 or the outflow port 516 may be mounted on the end plate 400 so as to cover the cooling material opening 410 of the end plate 400.

Meanwhile, although not shown in FIG. 4, the battery assembly 100 may further include a sealing assembly. The sealing assembly may be located on opened both sides of the frame 200 and formed to cover the battery cell stack 120. That is, the sealing assembly may be located between the end plate 400 and the battery cell stack 120 to separate opened both sides of the frame 200 from the external environment. Specifically, the sealing assembly may perform the role of sealing the cooling material so that it does not leak to the outside when the cooling material is injected into the inside of the frame 200.

Meanwhile, according to the present embodiments, a cooling line 500 may be connected to the inflow port 510 and the outflow port 516. The cooling line 500 may correspond to a part of a cooling material circulation structure in which a cooling material is supplied to the battery assembly 100 and the cooling material flowing along the inside of the battery assembly 100 is discharged from the battery assembly 100. The cooling line 500 may include a first cooling line 501 connected to the inflow port 510 and a second cooling line 502 connected to the outflow port 516. In the cooling material circulation structure, the cooling material moving along the first cooling line 501 is flowed into the inside of the frame 200 of the battery assembly 100 through the inflow port 510. The cooling material flowing inside the frame 200 is discharged through the outflow port 516 and moves to the second cooling line 502. The cooling material that has moved along the second cooling line 502 goes through a process of being cooled again and may then be again supplied to the first cooling line 501. The cooling material circulation structure refers to the series of processes.

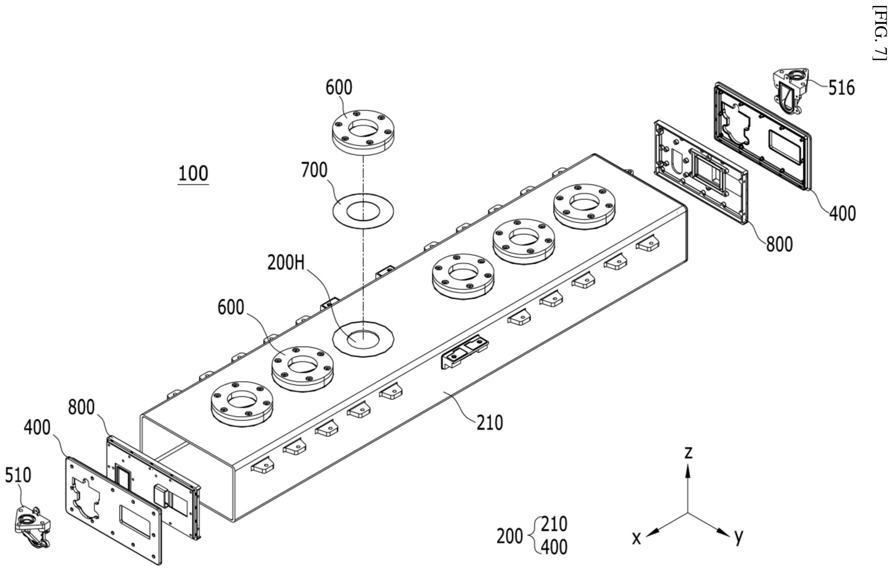

FIG. 7 is an exploded perspective view of components other than the battery cells among the battery assembly of FIG. 6. For convenience of explanation, illustrations of the battery cells are omitted.

Referring to FIGS. 6 and 7, the venting unit 600 according to the present embodiments is provided on one surface of the frame 200 and discharges gas inside the frame 200 when the pressure inside the frame 200 is equal to or greater than a specified pressure. When a thermal runaway phenomenon occurs in at least one battery cell 110 included in a plurality of battery assemblies 100, high-temperature gas or particles are generated. The pressure inside the frame 200 increases due to the generated gas, and when the pressure inside the frame 200 is equal to or greater than a specified pressure, the venting unit 600 operates to discharge the generated gas or particles to the outside of the frame 200. Thereby, it is possible to block the thermal runaway phenomenon that thermal propagation to other battery cells or other battery assemblies 100.

Meanwhile, as mentioned above, the battery assembly 100 according to the present embodiments adopts an immersion cooling system in which a cooling material flowed into the frame 200 through an inflow port 510 directly cools the battery cells 110. However, there may be problems in that gas or particles generated in the battery cells 110 encounter the cooling material to accelerate a thermal event or thermal runaway, or that the cooling material obstructs discharge of the gas or particles. In order to prevent such problems, the directional venting path for discharging gas or the like generated in the battery cells 110 through the venting unit 600 is preferably provided in a location that does not affect the immersion cooling system as much as possible. Thereby, the venting unit 600 according to the present embodiments may be provided on one surface of the frame 200, rather than the one surface of the frame 200 where the inflow port 510 or the outflow port 516 is provided. In other words, one surface of the frame 200 where the venting unit 600 is provided and at least one surface of the frame 200 where the inflow port and the outflow port are provided may be different surfaces from each other. One surface of the frame 200 where the venting unit 600 is provided and at least one surface of the frame 200 where the inflow port and the outflow port are provided may be surfaces perpendicular to each other.

As an example, the venting unit 600 may be located on the upper surface of the frame 200, and the inflow port 510 and the outflow port 516 may be located on the front surface and rear surface of the frame 200. Further, the venting unit 600 may be located on one surface of the main frame 210, and the inflow port 510 and the outflow port 516 may be located on one of the end plates 400 or on each of the end plates 400.

Taken together, in the frame 200, the venting unit 600 may be located on the other portion away from the portion where the inflow port 510 and the outflow port 516 are provided. Thereby, the venting unit 600 is located as far away as possible from each of the inflow port 510 and the outflow port 516, and the influence of the directional venting path on the flow of the cooling material flowing from the inflow port 510 to the outflow port 516 or the influence of the flow of the cooling material on the directional venting path can be minimized.

Meanwhile, a stable sealing structure is essential to realize the immersion cooling system. When the cooling material circulates inside the frame 200, it is necessary that the cooling material does not leak to the outside of the frame 200. However, in the case of the battery assembly 100 according to the present embodiments, since the immersion cooling system and directional venting are applied together, the cooling material that circulates inside the frame 200 may leak through the venting unit 600, which may reduce the cooling efficiency in the immersion cooling. Furthermore, there may be a problem in that the cooling material affects the operation of the venting unit 600, and thus the venting unit 600 cannot properly discharge gas or particles even in the event of a thermal runaway phenomenon. In order to prevent such problems, the venting unit 600 may be preferably located in an area that is not reached by the cooling material. That is, the venting unit 600 according to the present embodiments may be provided on the upper surface of the frame 200, which is a position that is not affected by the cooling material. When the venting unit 600 is located on the upper surface of the frame 200, the possibility of the cooling material leaking through the venting unit 600 can be reduced, and the influence of the cooling material on the operation of the venting unit 600 can be minimized.

Meanwhile, the venting unit 600 according to the present embodiments may have a higher operating pressure than a venting unit in a model to which the immersion cooling system is not applied. Here, the operating pressure of the venting unit 600 corresponds to the pressure inside the frame 200 that is the criterion at which the venting unit 600 starts to discharge gas within the frame 200. In other words, when the pressure inside the frame 200 is equal to or greater than a specified pressure, the specified pressure may correspond to the operating pressure of the venting unit 600 in the venting unit 600 that discharges the gas inside the frame 200.

The operating pressure of the venting unit 600 according to the present embodiments may be 1.0 bar or more and 2.5 bar or less. When the pressure inside the frame 200 is 1.0 bar or more and 2.5 bar or less, it may be designed such that the venting unit 600 operates and discharges the internal gas. Since the operating pressure of the venting unit in the model to which the immersion cooling system is not applied is in the range of 0.1 bar to 0.99 bar (tens of kPa level), it can be confirmed that the operating pressure of the venting unit 600 in the present embodiments to which the immersion cooling system is applied is greater than the operating pressure of the venting unit in the model to which the immersion cooling system is not applied.

As mentioned above, the cooling line 500 connected to the battery assembly 100 may correspond to a part of a cooling material circulation structure in which cooling material is supplied to the battery assembly 100 and then the cooling material flowing inside the battery assembly 100 is discharged from the battery assembly 100. For the cooling material circulation structure, when the cooling material is injected into the inside of the battery assembly 100 through the first cooling line 501 and the inflow port 510, if air exists inside the cooling line 500, the inflow port 510, the outflow port 516, and the frame 200, the volume of the air is reduced by the injection of the cooling material, which ultimately increases the internal pressure. In order to inject the cooling material while overcoming this increased internal pressure, the cooling material must be injected at a greater pressure. Eventually, the internal pressure increases to a level that the frame 200 cannot withstand, which may cause damage to the frame 200. Therefore, it is preferable that the inside of the cooling line 500, the inflow port 510, the outflow port 516 and the frame 200, and the like is made into vacuum as much as possible and then the cooling material is injected. If the inside of the cooling line 500, the inflow port 510, the outflow port 516, and the frame 200 is made into vacuum and then the cooling material is injected, the injection of the cooling material can be performed much more easily, and damage to the structure of the frame 200 can also be prevented.

Furthermore, air generally has a low heat transfer coefficient to the cooling material. If an air pocket exists inside the cooling material circulation structure, the cooling performance of the immersion cooling for the battery assembly 100 may be reduced. Therefore, from the perspective of cooling performance, it may be preferable to remove air from the inside of the cooling line 500, the inflow port 510, the outflow port 516, and the frame 200 to make into vacuum and then inject the cooling material.

However, practically, the inside of the cooling material circulation structure, i.e., the inside of the cooling line 500, the inflow port 510, the outflow port 516, and the frame 200 cannot be made into perfect vacuum, and the air can be removed as close to a vacuum as possible and then the cooling material can be injected.

When the battery assembly 100 is operating normally, the internal pressure of the battery assembly 100, that is, the internal pressure of the frame 200, becomes the highest is a situation in which cooling material is injected into the cooling material circulation structure in a vacuum or near-vacuum state. The situation where the cooling material is injected into the cooling material circulation structure is a situation where the internal pressure of the frame 200 becomes the highest during normal operation, and the venting unit 600 should not operate in this situation. This is because the venting unit 600 does not operate while the battery assembly 100 is operating normally, but must operate when a thermal runaway phenomenon occurs inside the battery assembly 100. Thereby, the operating pressure of the venting unit 600 may be greater than the operating pressure of the venting unit in a model where the immersion cooling system is not applied.

In other words, the venting unit 600 according to the present embodiments should not operate while injecting the cooling material into the cooling material circulation structure under normal operation conditions of the battery assembly 100, but should operate when a thermal runaway phenomenon occurs inside the battery assembly 100 and the internal pressure of the frame 200 increases to be equal to or greater than a specified pressure. So, the operating pressure of the venting unit 600 is preferably greater than the operating pressure of the venting unit in a model to which the immersion cooling system is not applied, and as an example, the operating pressure of the venting unit 600 may be 1.0 bar or more and 2.5 bar or less.

If the operating pressure of the venting unit 600 is less than 1.0 bar, there may be a problem in that the venting unit 600 operates while injecting the cooling material into the cooling material circulation structure under the normal operation condition of the battery assembly 100, so that the gas inside the frame 200 is discharged. On the other hand, if the operating pressure of the venting unit 600 exceeds 2.5 bar, there may be a problem in that the operating pressure of the venting unit 600 is excessively high, and even if a thermal runaway phenomenon occurs inside the battery assembly 100, the venting unit 600 may not operate, and therefore gas inside the frame 200 cannot be discharged.

Meanwhile, the venting unit 600 according to the present embodiments may be a rupture disc type that ruptures when the inner pressure of the frame 200 is equal to or greater than a specified pressure, a reversible type that opens and closes based on a specified pressure inside the frame 200, or a valve type that opens when the inner pressure of the frame is equal to or greater than a specified pressure.

However, the type or shape of the venting unit 600 is not particularly limited as long as it can discharge gas and particles inside the frame 200 when a thermal runaway phenomenon occurs inside the battery assembly 100. As an illustrative structure, a detailed shape of the venting unit 600 will be described below.

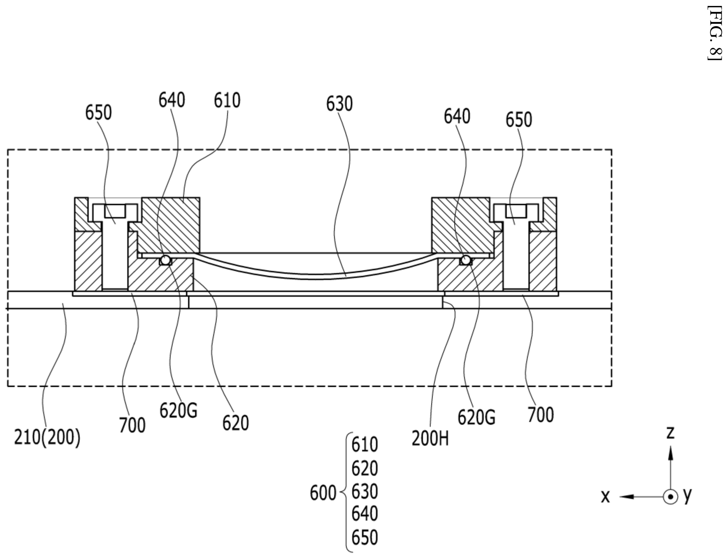

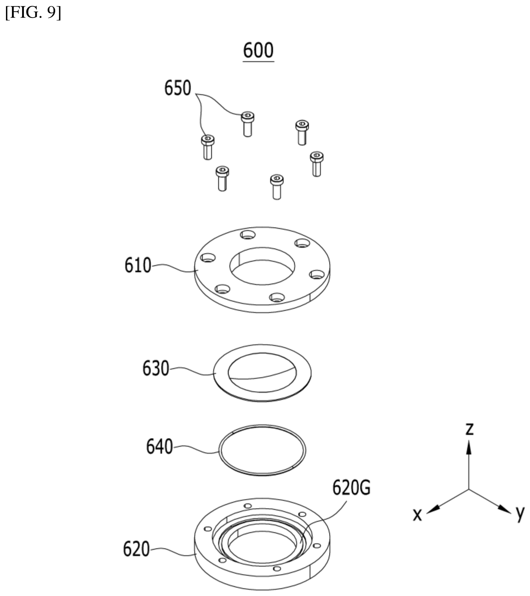

FIG. 8 is a cross-sectional view showing a cross section taken along the cutting line A-A' of FIG. 6. FIG. 9 is an exploded perspective view of a venting unit according to certain embodiments of the present disclosure.

Referring to FIGS. 6 to 9, a frame hole 200H may be formed in the frame 200, and a venting unit 600 may be mounted on the outer surface of the frame 200 so as to cover the frame hole 200H. The frame hole 200H may be formed on the upper surface of the frame 200. More specifically, the frame hole 200H may be formed on the upper surface of the main frame 210.

The venting unit 600 according to certain embodiments of the present disclosure may include an upper flange 610, a lower flange 620, a disk 630, a sealing member 640, and a bolt 650.

The upper flange 610 and the lower flange 620 may be members having a portion penetrating at the center. The upper flange 610 and the lower flange 620 are for fixing the disk 630, the upper flange 610 and the lower flange 620 may be coupled to each other, and the disk 630 may be located between the upper flange 610 and the lower flange 620. The coupling method between the upper flange 610 and the lower flange 620 is not limited, and as an example, bolt coupling may be applied. At least one bolt 650 may couple the upper flange 610 and the lower flange 620. For example, at least one bolt 650 may pass through the through hole of the upper flange 610 and then be fastened to a threaded hole formed in the lower flange 620. The portions penetrated in the center of the upper flange 610 and the lower flange 620 may be located to correspond to the frame hole 200H of the frame 200.

The disk 630 may be a rupture disk that ruptures when a specified pressure is applied. The portion penetrated in the center of the upper flange 610 and the lower flange 620 may be covered by the disk 630. A portion of the disk 630 may be located to correspond to the frame hole 200H of the frame 200. When a thermal runaway phenomenon occurs in the battery cells inside the frame 200, gas generated inside the frame 200 may pass through the frame hole 200H to press the disk 630. When a specified pressure is applied to the disk 630 by the gas, the disk 630 may rupture. While the disk 630 ruptures, the venting unit 600 operates, and gas inside the frame 200 may be discharged through the ruptured portion of the disk 630.

The sealing member 640 may be an O-ring-shaped member. The sealing member 640 is for securing the sealing property of the venting unit 600, and the sealing member 640 can prevent gas inside the frame 200 from leaking through a gap between the upper flange 610 and the lower flange 620 before the disk 630 ruptures. For example, the sealing member 640 may be located between the lower flange 620 and the edge of the disk 630. Further, a groove 620G may be formed in the lower flange 620, and the sealing member 640 may be mounted to this groove 620G. The sealing member 640 can prevent gas from leaking through a gap between the lower flange 620 and the edge of the disc 630.

Meanwhile, the venting unit 600 may be mounted on the upper surface of the frame 200 by means of a sealant, adhesive, bolt fastening, or welding. Specifically, the venting unit 600 may be fixed to the upper surface of the frame 200 by means of a sealant, adhesive, bolt fastening, or welding while being disposed on the upper surface of the frame 200. In addition, the sealing property of the venting unit 600 may be secured by means of a sealant, adhesive, bolt fastening, or welding.

As an example, as shown in FIGS. 7 and 8, the venting unit 600 may be mounted and fixed to the upper surface of the frame 200 by an adhesive 700. The adhesive 700 may be located between the venting unit 600 and the upper surface of the frame 200. The adhesive 700 may be provided on the outer portion of the upper surface of the frame 200. In particular, the adhesive 700 may extend along the outer circumference of the frame hole 200H of the frame 200. The venting unit 600 may be mounted and fixed to the outer portion of the upper surface of the frame 200 by the adhesive 700. In addition, the adhesive 700 may prevent gas inside the frame 200 from leaking out through a gap between the venting unit 600 and the upper surface of the frame 200.

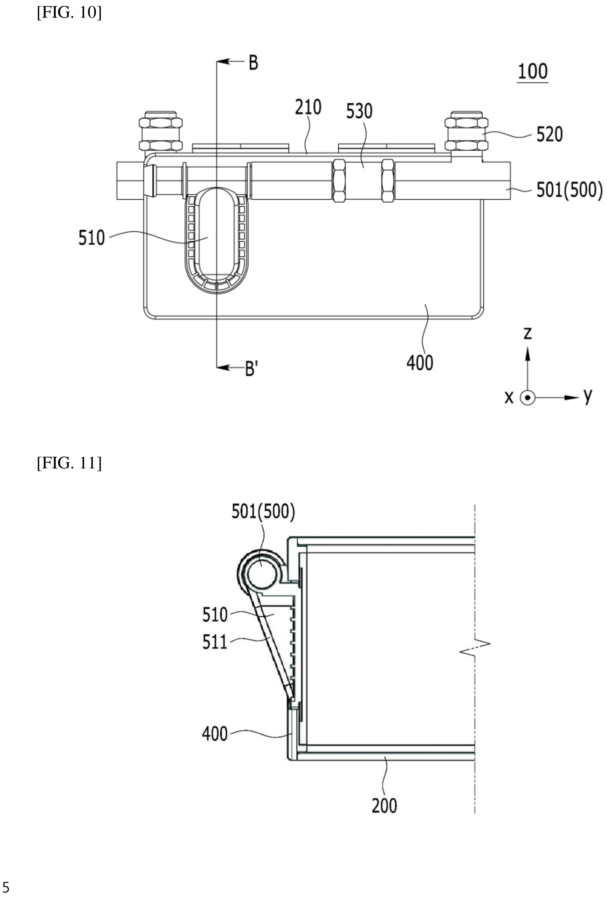

FIG. 10 is a plan view showing a battery assembly according to certain embodiments of the present disclosure. FIG. 11 is a cross-sectional view showing a cross section taken along the cutting line B-B' of FIG. 10.

Referring to FIGS. 3, 4, 10 and 11, the battery assembly 100 includes an inflow port 510 and an outflow port 516 for circulating a cooling material in the inside of the frame 200. A cooling line 500 may be connected to the inflow port 510 and the outflow port 516, respectively. The cooling material may pass through the heat exchanger 2200 from the cooling material reservoir 2100 described later, move through the cooling line 500, then flow into the inside of the frame 200 through the inflow port 510, flow out to the exterior of the frame 200 through the outflow port 516, and then be collected in the cooling material reservoir through the cooling line 500. Meanwhile, since the outflow port 516 has the same shape and structure as the inflow port 510, illustration of the outflow port 516 is omitted in FIGS. 10 and 11. In the following, descriptions of the same or corresponding contents as those of the inflow port 510 will be omitted.

As mentioned above, the cooling line 500 may include a first cooling line 501 connected to the inflow port 510 and a second cooling line 502 connected to the outflow port 516. The cooling line 500 may be a pipe-like member having rigidity to allow the cooling material to flow.

The inflow port 510 may have a shape corresponding to the cooling material opening 410 in order to cover the cooling material opening 410. As mentioned above, since the cooling material opening 410 is a hole extending in the vertical direction, the inflow port 510 may also be configured to extend in the vertical direction. Furthermore, the inflow port 510 may include a cover member 511 for covering the cooling material opening 410 of the end plate 400. The cover member 511 may be formed so as to be inclined downward on a surface facing the cooling material opening 410. Thereby, the cross-sectional area of the inflow port 510 may decrease as it goes from the upper side to the lower side (-z-axis direction).

Considering the shape and position of the above-mentioned cooling material opening 410 that extends up and down, the cooling material opening 410 connected to the inflow port 510 may be located lower than the center based on the height of the battery cell stack 120. That is, the lower end of the cooling material opening 410 connected to the inflow port 510 may be located close to the lower edge of the end plate 400. In addition, the upper end of the cooling material opening 410 connected to the outflow port 516 may be located higher than the center based on the height of the battery cell stack 120. That is, the upper end of the cooling material opening 410 connected to the outflow port 516 may be located close to the upper edge of the end plate 400.

If the cooling material opening 410 connected to the inflow port 510 is configured such that its lower end is located higher than the center based on the height of the battery cell stack 120, the cooling material may flow into the inside of the frame 200 as if it is falling from a high position, so that bubbles are likely to occur inside the cooling material. These bubbles may become a factor that inhibits the cooling effect.

In addition, if the cooling material opening 410 connected to the inflow port 510 is configured such that its upper end is located lower than the center based on the height of the battery cell stack 120, the cooling material flowing into the inside of the battery assembly 100 is filled only up to the height of the inflow port 510 and flows out to the outside, so that the inside of the battery assembly 100 may not be filled with a sufficient amount of cooling material, which may result in a decrease in cooling performance.

It is preferable that the cooling material opening 410 connected to the inflow port 510 is configured such that its lower end is located lower than the center based on the height of the battery cell stack 120, and the cooling material opening 410 connected to the outflow port 516 is configured such that its upper end is located higher than the center based on the height of the battery cell stack 120.

Further, since the cooling material opening 410 connected to the inflow port 510 extends in the up-and-down direction, the cooling material flowing into the frame 200 through the inflow port 510 can make overall contact with the battery cell stack 120. Similarly, the cooling material making overall contact with the battery cell stack 120 may be flowed out to the outside of the frame 200 through the outflow port 516. Therefore, since the cooling material can flow without stagnating within the frame 200, the overall cooling performance and cooling efficiency of the battery assembly 100 can be improved.

Further, the cooling material flowing in from the first cooling line 501 can flow along the inclined cover member 511 between the first cooling line 501 and the cooling material opening 410. Therefore, since the cooling material can flow into the inside of the battery assembly 100 without sudden changes in the flow direction, the possibility of bubbles being generated inside the cooling material can be reduced.

Further, since the inflow port 510 increases in the cross-sectional area as it moves from the first cooling line 501 toward the cooling material opening 410, the flow rate of the cooling material flowing in from the first cooling line 501 decreases inside the inflow port 510. Therefore, since the flow rate is reduced in advance before the cooling material flows into the inside of the frame 200 and makes contact with the battery cells 110, a sudden change in flow rate inside the frame 200 can be reduced. Thereby, the possibility of bubbles being generated inside the cooling material due to a sudden change in flow rate can be reduced, and the time for which the cooling material makes contact with the battery cells 110 can be increased, thereby improving the cooling performance.

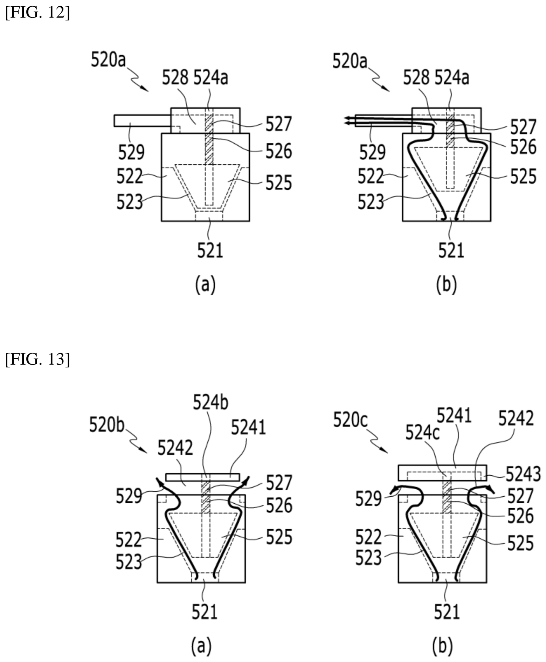

FIGS. 12(a) and (b) are diagrams showing a venting valve according to certain embodiments of the present disclosure. FIG. 12(a) show the state of the venting valve 520a before the gas is vented, and FIG. 12(b) shows the state of the venting valve 520a while the gas is being vented.

Referring to FIGS. 3, 4, 10 and 12, as mentioned above, the cooling lines 500 may be connected to the inflow port 510 and the outflow port 516, respectively. The venting valves 520 and 520a may be disposed in at least one of these cooling lines 500. The cooling line 500 may include a first cooling line 501 connected to the inflow port 510 and a second cooling line 502 connected to the outflow port 516. The venting valves 520 and 520a may be disposed in at least one of the first cooling line 501 and the second cooling line 502.

When gas is generated due to thermal runaway inside the battery assembly 100, the gas is discharged through the venting unit 600 as mentioned above. However, some gas may be discharged to the outside of the frame 200 through the cooling material opening 410 formed to flow in and out the cooling material, rather than through the venting unit 600. Thus, the gas generated inside the battery assembly 100 may diffuse toward the surroundings or other adjacent battery assemblies 100 through the cooling line 500.

According to certain embodiments of the present disclosure, a venting valve 520 may be connected to the cooling line 500 in order to solve the above problem. Among the gases generated inside the battery assembly 100, the gas flowing into the cooling line 500 may be vented through the venting valve 520. Therefore, the gas that diffuses along the cooling line 500 to the surroundings or other adjacent battery assemblies 100 may be discharged from the cooling line 500, thereby reducing the pressure of the cooling line 500 and at the same time, preventing the gas from diffusing through the cooling line 500.

The venting valve 520 may be connected to the cooling line 500. As an example, the venting valve 520 may be connected to each of the first cooling line 501 and the second cooling line 502. The venting valve 520 may discharge the gas in the cooling line 500 when the pressure of the cooling line 500 reaches a predetermined pressure due to the gas generated inside the battery assembly 100. That is, the venting valve 520 may discharge the gas in the cooling line 500 that has reached a predetermined pressure among the first cooling line 501 and the second cooling line 502 when the pressure of at least one of the first cooling line 501 and the second cooling line 502 reaches a predetermined pressure.

Referring to FIG. 12(a), the venting valve 520a may include a valve inflow port 521 through which gas in a cooling line 500 flows, a main body 522 that forms an internal space 523 through which gas flowing into the valve inflow port 521 flows, a blocking member 525 that is movable to close the valve inflow port 521, a valve spring 527 that presses the blocking member 525, a cap part 524a through which the discharge direction of the gas is guided, and a valve discharge part 529 through which the gas is discharged.

The blocking member 525 is movable so as to be housed in the internal space 523 and close the valve inflow port 521, or to separate from the internal space 523 and form a first flow path through which gas flows. That is, the blocking member 525 is movable in the direction in which the valve shaft 526 extends from the cap part 524a toward the valve inflow port 521. As an example, the valve shaft 526 is expandable in a telescopic manner, and the blocking member 525 is fixed to the end of the valve shaft 526, thereby being movable in the extension direction of the valve shaft 526. As another example, the valve shaft 526 extends through the blocking member 525, and the blocking member 525 is inserted into the valve shaft 526, thereby being movable in the extension direction of the valve shaft 526. Meanwhile, the structure or method in which the blocking member 525 moves in the extension direction of the valve shaft 526 is not limited by those set forth above, and can be modified or changed in various ways.

The valve spring 527 may be disposed on the valve shaft 526 to presses the blocking member 525 in the direction in which the blocking member 525 closes the valve inflow port 521. Thereby, the blocking member 525 can prevent the cooling material of the cooling line 500 from flowing out to the outside through the venting valve 520 under a normal situation. If the gas is diffused through the cooling line 500, the pressure of the cooling line 500 usually reaches a predetermined pressure that is higher than the pressure at which the cooling material circulates, and due to the high pressure environment generated in the cooling line 500, the blocking member 525 overcomes the pressing force of the valve spring 527 and moves away from the internal space 523, thereby forming the first flow path. Therefore, the elastic coefficient of the valve spring 527 can be determined taking into consideration the pressure of the cooling line 500 when a thermal runaway phenomenon occurs in the battery assembly 100. However, the elastic coefficient of the valve spring 527 can be variously changed in accordance with the specifications of the battery assembly 100 and the battery pack including the same.

The gas flowing into the valve inflow port 521 moves to the cap part 524a along the first flow path that is inclined outward from the inside of the main body 522. The temperature and/or pressure of the high-temperature and/or high-pressure gas may decrease as it passes through the inclined first flow path. Meanwhile, in the embodiment shown in FIG. 12, the first flow path is formed in an inclined shape, but is not limited by the shape shown in the figure. For example, the shape of the first flow path can be variously modified or changed in accordance with the cross-sectional shape of the internal space 523 in which the main body 522 is formed.

The cap part 524a of the venting valve 520a shown in FIG. 12 (a) may include a second flow path 528 that is formed so that the path of the gas flowing in from the first flow path of the main body 522 is bent. Thereby, the discharge direction of the gas discharged from the venting valve 520a can be determined. For example, the gas discharged from the venting valve 520a can be bent in the second flow path 528 so that it proceeds in the direction in which the frame 200 of the battery assembly 100 extends (x-axis or -x-axis direction). Therefore, the influence of the gas discharged from the venting valve 520a on the adjacent other battery assembly 100 can be minimized.

FIGS. 13(a) and (b) are diagrams showing a venting valve according to certain other embodiments of the present disclosure. FIG. 13(a) shows the state of the venting valve 520b while gas is being vented, and FIG. 13(b) shows the state of the venting valve 520c while gas is being vented.

Referring to FIG. 13(a), the cap part 524b of the venting valve 520b may include a plate-like part 5241 that is spaced apart from the main body 522 and is disposed to face the internal space 523. Meanwhile, in the following, descriptions of the same or corresponding contents as those of the venting valve 520a described with reference to FIG. 12(a) will be omitted.

The gap space 5242 between the main body 522 and the plate-like part 5241 may be opened so as to communicate with the outside. Gas that have passed through the first flow path formed between the main body 522 and the blocking member 525 may be discharged to the outside of the cooling line 500 (see FIGS 3 and 4) as the gas temperature and/or pressure decreases while expanding within the gap space 5242 of the cap part 524b.

Referring to FIG. 13(b), the cap part 524c of the venting valve 520c may further include a skirt part 5243 that extends from the edge of the plate-like part 5241 toward the main body 522. Meanwhile, in the following, descriptions of the same or corresponding contents as those of the venting valves 520a and 520b described with reference to FIGS. 12(a) and (b) will be omitted.

The gas discharged to the outside through the gap space 5242 between the main body 522 and the plate-like part 5241 by the skirt part 5243 of the cap part 524c is bent downward toward venting valve 520c and discharged. It is therefore possible to prevent gas discharged from vent valve 520c from directly contacting pack cover 1200 of the battery pack described below, thereby preventing the pack cover 1200 from being damaged due to high temperature and/or high pressure gas.

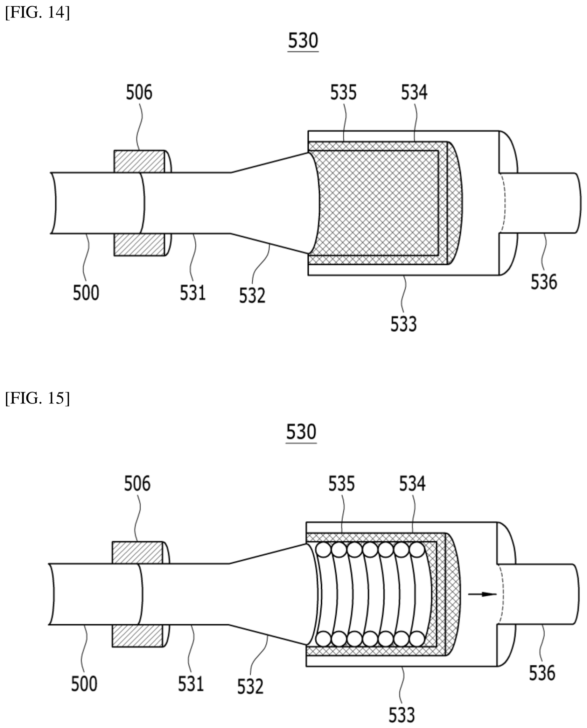

FIG. 14 is a diagram showing a filter unit according to certain embodiments of the present disclosure.

Referring to FIGS. 3, 4, 10 and 14 together, the cooling line 500 may be provided with a filter unit 530. Specifically, the filter units 530 may be respectively disposed in the cooling line 500 between the inflow port 510 and the venting valve 520 and between the outflow port 516 and the venting valve 520. More specifically, one filter unit 530 may be disposed in the first cooling line 501 between the inflow port 510 and the venting valve 520, and another filter unit 530 may be disposed in the second cooling line 502 between the outflow port 516 and the venting valve 520.

The filter unit 530 may include a filter inflow port 531 through which the cooling material flows in, a filter body 533, a filter member 534 disposed within the filter body 533 to filter the cooling material flowing in from the filter inflow port 531, and a filter outflow port 536 through which the cooling material filtered by the filter member 534 flows out. At this time, the filter member 534 may be a porous metal filter.

The cooling material flowing through the cooling line 500 can pass through the filter member 534, but other foreign substances, and the like can be filtered out by the filter member 534. In particular, high-temperature particles and/or flames moving through the cooling line 500 can be filtered out by the filter member 534.

The gas generated due to the thermal runaway phenomenon occurring within the battery assembly 100 may contain high-temperature particles such as active material particles or electrolyte in the form of sparks. Further, flames may also be discharged during gas discharge. Such gas may propagate to the surroundings or adjacent battery assemblies 100 via the cooling line 500. The filter unit 530 may be connected to the cooling line 500 to filter out the high-temperature particles and/or flames as mentioned above.

In addition, as mentioned above, the filter unit 530 may be disposed in the first cooling line 501 between the inflow port 510 and the venting valve 520. Further, another filter unit 530 may be disposed in the second cooling line 502 between the outflow port 516 and the venting valve 520. That is, the gas generated within the battery assembly 100 may be filtered through the filter unit 530 before flowing into the venting valve 520. Therefore, the flame moving together with the gas in the cooling line 500 may be filtered, thereby improving the operational reliability of the venting valve 520. Further, since the gas discharged through the venting valve 520 is gas that has passed through the filter unit 530, it may be discharged in a state in which foreign substances inside have been removed and/or in a state in which the temperature has been reduced. Therefore, even if the gas passing through the filter unit 530 is discharged through the venting valve 520, the influence on the surroundings can be reduced.

The filter inflow port 531 may include a diffusion part 532 whose cross-sectional area increases toward the filter member 534. The gas flowing into the filter inflow port 531 may be decreased in temperature and pressure as it passes through the diffusion part 532 whose cross-sectional area increases. Therefore, the gas flowing into the filter unit 530 may be first decreased in temperature and pressure by the diffusion part 532, and then high-temperature particles and/or flames may be filtered by the filter member 534.

The connecting member 506 is a member that connects the cooling line 500 and the filter unit 530. That is, the connecting member 506 may connect the filter inflow port 531 of the filter unit 530 disposed in each of the first cooling line 501 and the second cooling line, and each of the first cooling line 501 and the second cooling line. The connecting member 506 can be coupled to the cooling line 500 and the filter unit 530 by a screw coupling, thereby connecting the cooling line 500 and the filter unit 530 to each other. The connection between the filter unit 530 and the cooling line 500 can be more easily achieved through the connecting member 506. Meanwhile, the method by which the connecting member 506 fixes the cooling line 500 and the filter unit 530 is not limited by those set forth above, and can be modified and changed in various ways.

FIG. 15 is a diagram showing a filter unit according to a modified embodiment of the present disclosure.

Referring to FIG. 15, the filter unit 530 may further include an elastic member 535 connected to the filter member 534. At this time, the filter member 534 is movable between a first position in which the cooling material is filtered and a second position in which the cooling material is bypassed. In the example shown in FIG. 15, a state where the filter member 534 is located at the first position is shown.

The filter member 534 is maintained in the first position by the elastic member 535. When the cooling material flows into the filter unit 530 and passes through the filter member 534, the filter member 534 receives pressure (force) in the direction in which the cooling material flows. Thereby, the filter member 534 receives a force (pressure) to move to the second position where the cooling material is bypassed. If a pressure (force) equal to or greater than a specified level is applied to the filter member 534, the filter member 534 may be damaged. To prevent this, when the pressure applied to the filter member 534 reaches a predetermined filter pressure, the filter member 534 may be moved from the first position to the second position. In this case, the predetermined filter pressure may be a pressure at which the force applied to the filter member 534 exceeds the restoring force by the elastic member 535.

When the pressure applied to the filter member 534 reaches a predetermined filter pressure, the pressure within the filter unit 530 may increase due to gas released by a thermal runaway phenomenon occurring within the battery assembly 100. However, the above-mentioned cases are merely examples, and there may be a variety of cases in which the pressure applied to the filter member 534 reaches a predetermined filter pressure. For example, as foreign substances in the cooling material flowing through the cooling line 500 accumulate in the filter member 534, the pressure applied to the filter member 534 increases, and when the foreign substances accumulate to be equal to or greater than a specified level in the filter member 534, the pressure applied to the filter member 534 may reach a predetermined filter pressure.

When the pressure applied to the filter member 534 reaches a predetermined filter pressure due to the above-mentioned cases, the filter member 534 moves from the first position to the second position, and the cooling material flowing into the filter unit 530 bypasses the filter member 534 and flows out from the filter unit 530 through the filter outflow port 536 without being filtered by the filter member 534.

Meanwhile, although not shown in FIG. 15, the battery assembly 100 may further include a position sensor that detects the movement of the filter member 534. The position sensor may detect that the filter member 534 moves from a first position to a second position. For example, the position sensor may include a Hall sensor (hall IC) that uses the Hall effect to detect a change in a magnetic field and generate a signal. The position sensor can generate an electrical signal when it detects that the filter member 534 moves from a first position to a second position. Whether a pressure equal to or greater than a predetermined filter pressure is applied to the filter member 534 can be monitored by the electrical signal generated from the position sensor.

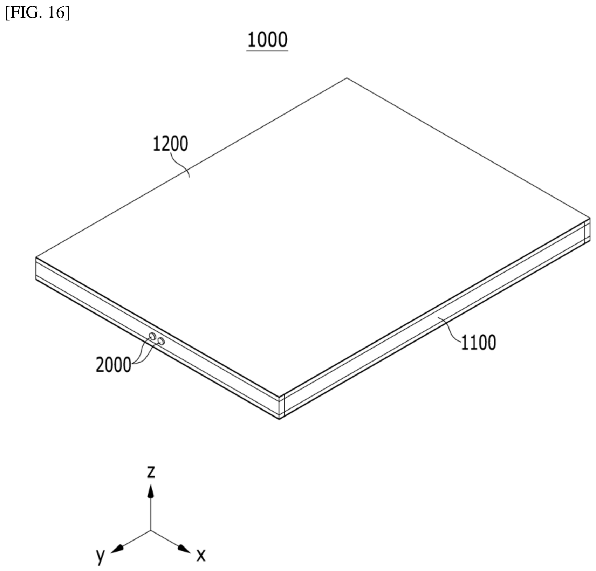

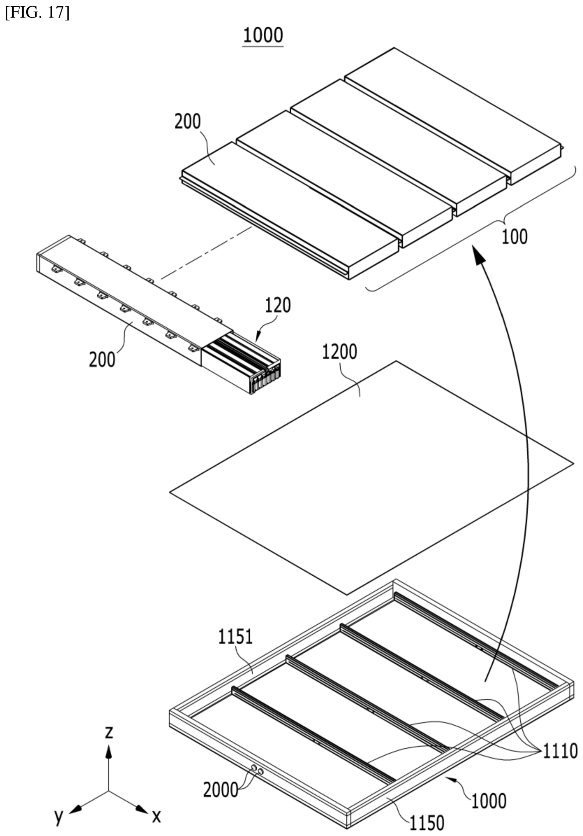

FIG. 16 is a perspective view showing a battery pack according to certain embodiments of the present disclosure. FIG. 17 is an exploded perspective view of the battery pack of FIG. 16.

Referring to FIGS. 16 and 17, a battery pack 1000 according to certain embodiments of the present disclosure includes at least one battery assembly 100, a pack frame 1100 that houses the battery assembly 100 and has an opened upper part, and a pack cover 1200 that covers the opened upper part of the pack frame 1100. Here, the pack frame 1100 and the pack cover 1200 can be joined to each other by a method such as welding to seal the inside of the battery pack 1000. In addition, various control and protection systems such as a BMS (Battery Management System) and a BDU (Battery Disconnect Unit) can be mounted inside the battery pack 1000 together with the battery assembly 100. In FIG. 17, the venting unit is not shown in the battery assembly 100, but this is for convenience, and the battery assembly 100 of the present disclosure is provided with the venting unit.

The pack frame 1100 may include a side pack frame 1150 and at least two internal beams 1110 formed on the bottom surface of the pack frame 1100. Here, the bottom surface of the pack frame 1100 and the at least two internal beams 1110, and the bottom surface of the pack frame 1100 and the side pack frame 1150 may be coupled to each other by a method such as welding.

The plurality of battery assemblies 100 may be mounted in an area partitioned from each other by the side pack frame 1150 and at least two internal beams 1110. In other words, the plurality of battery assemblies 100 may be respectively disposed in an area between the side pack frame 1150 and the internal beams 1110, and an area located between adjacent internal beams 1110. More specifically, in the battery pack 1000, the battery assembly 100 may be disposed between a pair of internal beams 1110 located adjacent to each other among the plurality of internal beams 1110 and the side pack frame 1150.

Therefore, the plurality of battery assemblies 100 are surrounded by at least two internal beams 1110 and the side pack frame 1150, so that each battery assembly 100 may be protected from external impact.

The side pack frame 1150 may be disposed on the edge of the bottom surface of the pack frame 1100, and may extend upward (in the z-axis direction) from the bottom surface of the pack frame 1100. More specifically, it may extend upward from each edge of the bottom surface of the pack frame 1100. Here, the upper end of the side pack frame 1150 may make contact with the pack cover 1200. At this time, the upper end of the side pack frame 1150 and the pack cover 1200 may be coupled to each other by a method such as welding, thereby sealing the inside of the battery pack 1000.

The plurality of internal beams 1110 may be spaced apart from each other. Here, the distance at which the adjacent internal beams 1110 are spaced apart from each other may be equal to or greater than the size of the battery assembly 100. Further, the end of the internal beam 1110 may make contact with the inner surface 1151 of the side pack frame 1150. More specifically, both ends of the internal beam 1110 may make contact with the inner surface 1151 of the side pack frame 1150, respectively.

When a plurality of battery assemblies 100 are mounted on the pack frame 1100, each of the plurality of battery assemblies 100 may be connected to a cooling line 500. Specifically, the first cooling line 501 may be connected to an inflow port 510 of each of the plurality of battery assemblies 100, and the second cooling line 502 may be connected to an outflow port 516 of each of the plurality of battery assemblies 100.

In this case, the cooling line 500 connecting the plurality of battery assemblies 100 may extend through the upper part of the internal beam 1110. As another example, the cooling line 500 connecting the plurality of battery assemblies 100 may extend through the internal beam 1110. However, the connection structure of the cooling line 500 connecting the plurality of battery assemblies 100 is not limited to those set forth above, and may be variously changed and modified in accordance with the arrangement of various components such as the plurality of battery assemblies 100 and the BMS (Battery Management System), BDU (Battery Disconnect Unit) disposed inside the battery pack 1000.

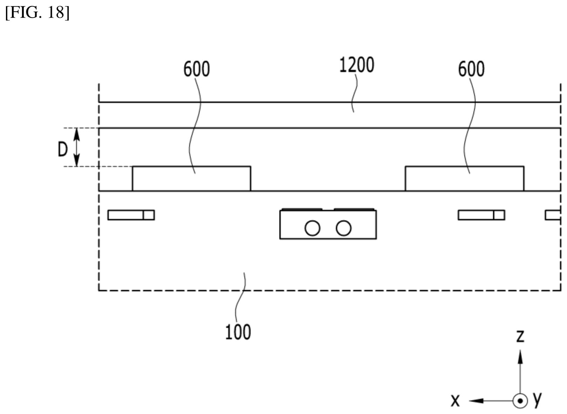

FIG. 18 is a cross-sectional view of a battery pack according to certain embodiments of the present disclosure.

Referring to FIGS. 3, 16 and 18, the pack cover 1200 is spaced apart from the venting unit 600 so that a predetermined venting space is provided between the venting unit 600 and the pack cover 1200 of the battery assembly 100. When a thermal runaway phenomenon occurs inside the battery assembly 100, gas generated inside the battery assembly 100 is discharged to the outside of the battery assembly 100 through the venting unit 600. Since the venting unit 600 is provided on the upper surface of the frame 200, the gas can be discharged in the upper direction of the battery assembly 100. Since it is necessary to secure a venting space sufficient for the gas discharged through the venting unit 600 to move, the pack cover 1200 is preferably located spaced apart from the venting unit 600. That is, the venting space in which the pack cover 1200 is provided apart from the venting unit 600 is used as a flow path through which the gas discharged through the venting unit 600 moves. If such a venting space is not provided inside the battery pack 1000, the gas discharged from the venting unit 600 cannot reach a venting device (not shown) provided in the battery pack 1000, and while the sealing of the battery pack 1000 is being released under this state, the battery pack 1000 may be exploded.

Meanwhile, in the venting space, a distance D between the venting unit 600 and the pack cover 1200 may be 5 mm or more and 25 mm or less. If the distance D between the venting unit 600 and the pack cover 1200 is less than 5 mm, the venting space is too narrow, so that the gas discharged through the venting unit 600 cannot flow smoothly inside the battery pack 1000. As a result, the gas cannot reach the venting device (not shown) installed in the battery pack 1000, which may cause an explosion of the battery pack 1000. In addition, if the distance D between the venting unit 600 and the pack cover 1200 exceeds 25 mm, the venting space is too excessive, and the height of the battery pack 1000 may increase more than necessary. This becomes a factor that inhibits the space utilization or energy density of the battery pack 1000.

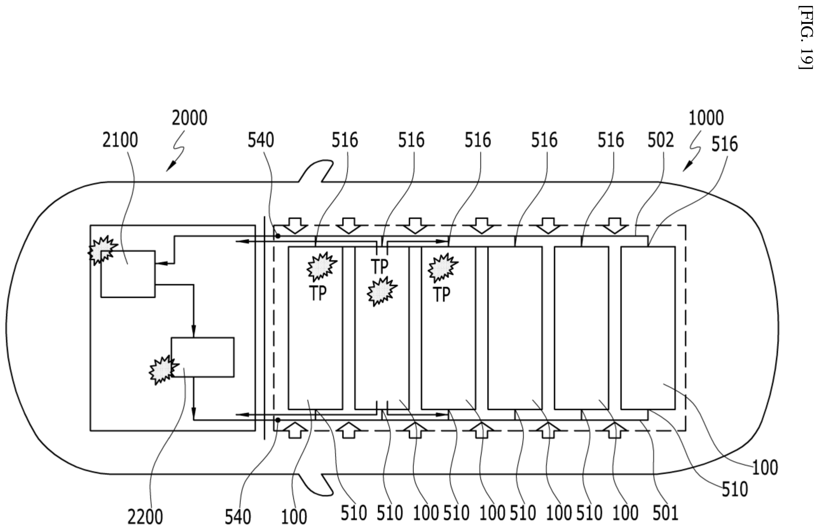

FIG. 19 is a schematic diagram for explaining the positions where the venting valve and the filter unit are disposed in the battery pack.

Referring to FIGS. 3, 4 and 19, the battery pack 1000 may be connected to an external device 2000 including a cooling material reservoir 2100 and a heat exchanger 2200. In FIG. 19, only components for circulating the cooling material are shown for convenience of explanation, but various components may be included depending on the device in which the battery pack 1000 is mounted.

The cooling material stored in the cooling material reservoir 2100 passes through the heat exchanger 2200 and then circulates along the cooling line 500 of the battery pack 1000. Specifically, the cooling material that has passed through the heat exchanger 2200 can be flowed into the inflow port 510 of each of the plurality of battery assemblies 100 via the first cooling line 501. The cooling material that flows into the battery assemblies 100 can cool the battery assemblies 100 and then flow out to the second cooling line 502 through the outflow port 516 of each of the plurality of battery assemblies 100. The cooling material that flows out to the second cooling line 502 can flow back into the cooling material reservoir 2100.

As shown in FIG. 19, the venting valve 520 may be disposed between the inflow ports 510 of the plurality of battery assemblies 100 and between the outflow ports 516 of the plurality of battery assemblies 100. Therefore, even if a thermal runaway phenomenon occurs in any one of the plurality of battery assemblies 100, the gas may be prevented from propagating to the adjacent battery assembly 100 by the venting valve 520 disposed between the plurality of battery assemblies 100.

A venting valve 520 may be further disposed between the uppermost stream of the first cooling line 501 and the inflow port 510 of the battery assembly 100 located most adjacent to the uppermost stream of the first cooling line 501. In addition, a venting valve 520 may also be further disposed between the lowermost stream of the second cooling line 502 and the outflow port 516 of the battery assembly 100 located most adjacent to the lowermost stream of the second cooling line 502. Therefore, even if a thermal runaway phenomenon occurs in the battery assembly 100 closest to the external device 2000 among the plurality of battery assemblies 100, it is possible to prevent gas from propagating to the external device 2000 by the venting valve 520 that is arranged between the uppermost stream of the first cooling line 501 and the battery assembly 100 disposed closest to the uppermost stream of the first cooling line 501 and between the lowermost stream of the second cooling line 502 and the battery assembly 100 disposed closest to the lowermost stream of the second cooling line 502.

A filter unit 530 may be disposed between each inflow port 510 of the plurality of battery assemblies 100 and the venting valve 520 located on the flow direction side of the first cooling line 501 from the inflow port 510. In addition, the filter unit 530 may be further disposed between the uppermost stream of the first cooling line 501 and the venting valve 520 located most adjacent to the uppermost stream of the first cooling line 501. Furthermore, the filter unit 530 may be disposed between each outflow port 516 of the plurality of battery assemblies 100 and the venting valve 520 located on the flow direction side of the second cooling line 502 from the outflow port 516. Therefore, the cooling material circulating inside the battery pack 1000 may be filtered by the filter unit 530 before flowing into the venting valve 520.

The battery pack 1000 may include a pressure sensor 540 that measures the pressure of at least one of the first cooling line 501 and the second cooling line 502. More specifically, the pressure sensor 540 may be disposed in at least one of: between the uppermost stream of the first cooling line 501 and the filter unit 530 located most adjacent to the uppermost stream of the first cooling line 501, and between the lowermost stream of the second cooling line 502 and the filter unit 530 located most adjacent to the lowermost stream of the second cooling line 502.

The pressure sensor 540 measures the pressure of the cooling line 500, and can monitor whether the cooling material is smoothly circulating along the cooling line 500. For example, if the filter member 534 (see FIG. 14) of the filter unit 530 is clogged by foreign substances or the like, the pressure of the cooling line 500 measured by the pressure sensor 540 increases. Therefore, whether there is an abnormality in the circulation of the cooling line 500 of the battery pack 1000 can be monitored by the pressure sensor 540.

In addition, in the case of the filter unit 530 described with reference to FIG. 15, since the filter unit 530 in which a pressure equal to or greater than a predetermined filter pressure is applied to the filter member 534 can be specified by the position sensor that detects the position of the filter member 534, it is easy to specify the filter unit 530 in which an abnormality has occurred among the plurality of filter units 530 included in the battery pack 1000. Thereby, maintenance related to the circulation of cooling material in the battery pack 1000 can be facilitated.

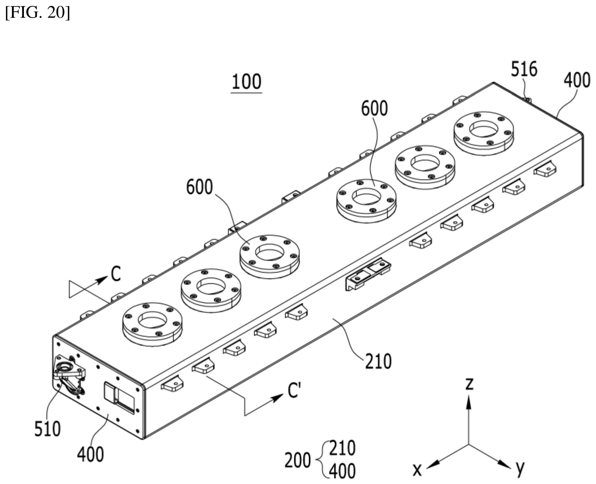

FIG. 20 is a perspective view showing a battery assembly according to certain embodiments of the present disclosure. FIG. 21 is a cross-sectional view showing a cross section taken along the cutting line C-C' of FIG. 20.

Referring to FIG. 5, 20 and 21, as mentioned above, the battery cell 110 may have a sealing part 114s, which is a portion that adheres to the outer peripheral side of the pouch case 114. FIG. 21 shows a state in which a sealing part 114s corresponding to the upper end part 114b of the battery cell 110 is folded for space utilization after sealing is completed.

At least a part of the sealing part 114s may be provided on a portion of the battery cell 110 that faces the venting unit 600. That is, at least a part of the sealing part 114s in the battery cell 110 may be located to face the venting unit 600.

As an example, the upper end 114b of the battery cell 110 may be a sealing part 114s (see FIGS. 5 and 21) where the pouch case 114 is sealed, and the lower end 114a of the battery cell 110 may not be a portion where the sealing is performed, but may be a folding part where the pouch case 114 is folded. The venting unit 600 may be provided on the upper surface of the frame 200. The sealing part 114s at the upper end 114b of the battery cell 110 may be located so as to face the venting unit 600 provided on the upper surface of the frame 200.

When a thermal event or thermal runaway occurs in the battery cell 110, gas is generated in the battery cell 110 and the internal pressure of the battery cell 110 increases. This gas can be mainly discharged through the sealing part 114s of the battery cell 110. That is, due to the increased internal pressure, the sealing is released in some parts of the sealing part 114s, and the venting gas and the like can burst out and be discharged through the unsealed sealing part 114s.

At least a part of the sealing parts 114s of the battery cell 110 are provided to face the venting unit 600, which more clearly realizes a "directional venting" structure that allows gas and particles generated in the battery cell 110 to be discharged through the venting unit 600.

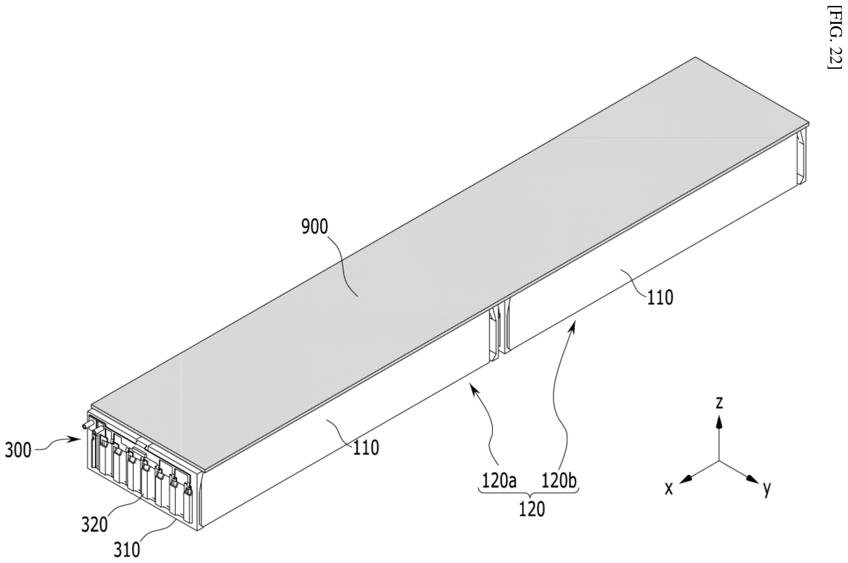

The configuration of the separation member according to various embodiments of the present disclosure will be described in detail below. FIG. 22 is a perspective view showing a separation member and battery cells according to certain embodiments of the present disclosure.

Referring to FIGS. 20 to 22 together, in a battery assembly 100 according to certain embodiments of the present disclosure, a separation member 900 may be located between battery cells 110 and a venting unit 600. For example, within the frame 200, a separation member 900 may be located in a space between battery cells 110 and a venting unit 600.

One side space of the separation member 900 may be a space S1 facing the venting unit 600, and the other side space of the separation member 900 may be a space S2 through which a cooling material flows. The space S2 through which a cooling material flows refers to a space through which a cooling material flowed into the frame 200 via the inflow port 510 flows while coming into contact with the battery cells 110.

As mentioned above, there may be problems in that gas or particles generated in the battery cells 110 encounter the cooling material to accelerate a thermal event or thermal runaway, or that the cooling material obstructs discharge of the gas or particles. In order to prevent such problems, the directional venting path for discharging gases generated in the battery cells 110 through the venting unit 600 and the immersion cooling method are preferably configured so that they do not affect each other.

By the separation member 900 according to the present embodiments, the space where gas or particles generated from the battery cell 110 are discharged through the venting unit 600 and the space where the cooling material flows in contact with the battery cells 110 to cool the battery cells 110 can be distinguished and separated. Therefore, it is possible to minimize the influence or interference between the directional venting path through which gas generated from the battery cell 110 is discharged and the cooling material that flows in contact with the battery cell 110. This makes it possible to prevent problems such as gas or particles encountering the cooling material and accelerating a thermal event or thermal runaway, or problems with the cooling material obstructing the discharge of gas or particles.

The shape or material of the separation member 900 is not particularly limited as long as the separation member can separate the space S1 facing the venting unit 600 and the space S2 through which the cooling material flows. As an example, the separation member 900 may be a plate-like member having a predetermined thickness. In FIG. 22, a separating member 900, which is a plate-like member covering the upper parts of the battery cells 110, is shown as an example. In addition, the separation member 900 according to the present embodiments may be a member separate from the frame 200, and may be coupled or fixed to the frame 200. Further, the separation member according to certain other embodiments may be a member that is integrated with the frame 200.

Meanwhile, in order for the gas generated in the battery cell 110 to be guided to the venting unit 600, the separation member 900 may include a material that can be easily ruptured by the gas emitted from the battery cell 110. At least a part of the separating member 900 is ruptured by the gas or particles emitted from the battery cell 110, and the gas or particles move to the space S1 facing the venting unit 600 through the ruptured portion, and can be discharged through the venting unit 600.

Meanwhile, as mentioned above, a plurality of battery cells 110 may be stacked to form a battery cell stack 120. In addition, a plurality of battery cell stacks 120 may be provided within the frame 200. As an example, the battery cell stack 120 may include a first battery cell stack 120a and a second battery cell stack 120b. The first battery cell stack 120a and the second battery cell stack 120b may be disposed along a direction perpendicular to the direction in which the battery cells 110 are stacked within one battery cell stack 120. For example, within one battery cell stack 120, the battery cells 110 may be stacked along a direction parallel to the y-axis, and the first battery cell stack 120a and the second battery cell stack 120b may be disposed along a direction parallel to the x-axis. The separation member 900 according to the present embodiments may be disposed as covering the upper portions of both the first battery cell stack 120a and the second battery cell stack 120b.

A plurality of battery cell stacks 120 may be provided within one frame, thereby increasing the battery capacity and energy density of the battery assembly 100. The loss in battery capacity or energy density caused by the provision of immersion cooling-related structures such as an inflow port 510 or an outflow port 516 can be complemented by the plurality of battery cell stacks 120.

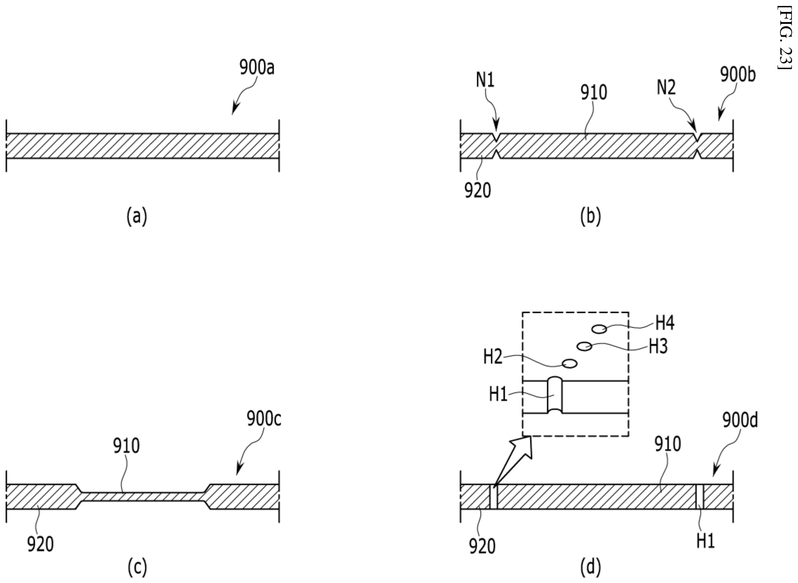

FIG. 23 is a diagram showing separation members according to various embodiments of the present disclosure.

Referring to FIGS. 21 and 23(a) to (d), at least a part of the separation members 900a, 900b, 900c and 900d according to certain embodiments of the present disclosure may be ruptured when a specified pressure or higher is applied. At least a part of the separation member 900 is ruptured by gas or particles emitted from the battery cell 110, and may move to a space S1 facing the venting unit 600 through the ruptured part and be discharged through the venting unit 600.

First, referring to FIG. 23(a), the separation member 900a according to certain embodiments of the present disclosure may be a plate-like member. The separation member 900a may include a material that can be easily ruptured by gas emitted from the battery cell, or may have a thickness that is thin enough to be easily ruptured by gas emitted from the battery cell.

Referring to FIG. 23(b), in order to form a portion that is ruptured when a pressure equal to or greater than a specified level is applied, notches N1 and N2 may be formed in the separation member 900b according to certain other embodiments of the present disclosure. The notches N1 andN2 refer to portions of the separation member 900b that are punctured by a predetermined thickness. The separating member 900b may include a first portion 910 and a second portion 920, and the first portion 910 and the second portion 920 may be separated by the notches N1 and N2. The first portion 910 is a portion where rupture is induced, and the notches N1 and N2 and the first portion 910 are ruptured by gas emitted from the battery cell, through which the gas may move to a space facing the venting unit.

Referring to FIG. 23(c), in order to form a portion that ruptures when a pressure equal to or greater than a specified level is applied, a boundary portion having a thickness difference may be formed in a separation member 900c according to certain other embodiments of the present disclosure. The separation member 900c may include a first portion 910 and a second portion 920, and the first portion 910 may be a portion that is thinner than the second portion 920, and may be a portion where rupture is induced. The boundary between the first portion 910 and the second portion 920 may correspond to the boundary portion having a thickness difference. The first portion 910 having a weak strength due to its thin thickness may be ruptured by gas emitted from the battery cell, and the gas may move to a space facing the venting unit through the ruptured first portion 910.

Referring to FIG. 23(d), in order to form a portion that ruptures when a pressure equal to or greater than a certain level is applied, a plurality of holes H1, H2, H3 and H4 may be formed in a separation member 900d according to certain other embodiments of the present disclosure. The plurality of holes H1, H2, H3 and H4 refer to holes that penetrate the separation member 900d. The separation member 900d may include a first portion 910 and a second portion 920, and the first portion 910 and the second portion 920 may be divided by a plurality of holes H1, H2, H3 and H4 disposed at predetermined intervals. The plurality of holes H1, H2, H3 and H4 disposed at predetermined intervals may form a boundary between the first portion 910 and the second portion 920. The portion between the plurality of holes H1, H2, H3 and H4 or the first portion 910 is ruptured by the gas emitted from the battery cell, through which the gas can move to the space facing the venting unit.

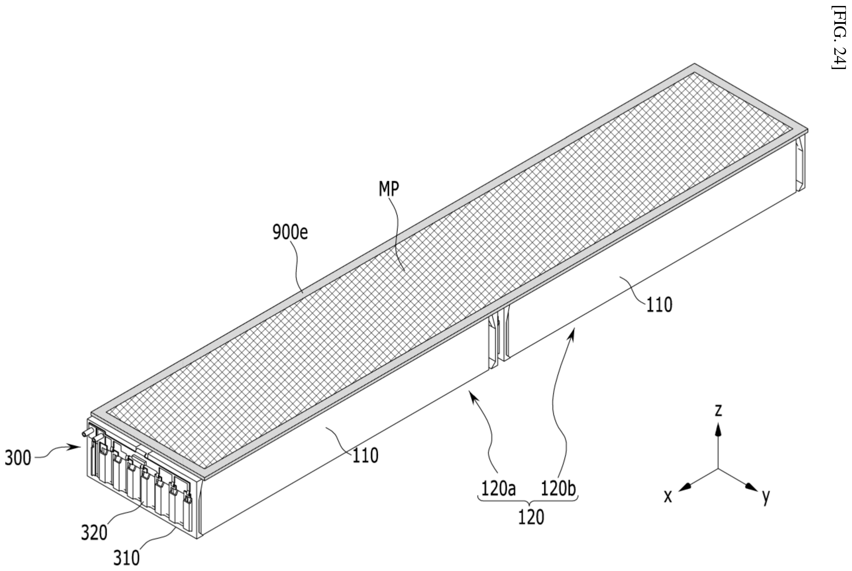

FIG. 24 is a perspective view showing a separation member including a mesh part and battery cells according to certain other embodiments of the present disclosure.

Referring to FIG. 24, the separation member 900e according to certain other embodiments of the present disclosure may include a mesh part MP. For example, the mesh part MP may be provided in at least one area of the separation member 900e. The mesh part MP refers to a porous structure, and may include, for example, a metal material. The mesh part MP may be formed by weaving metal wires.

Gas or particles emitted from the battery cell can pass through the mesh part MP of the separation member 900e and move to the space S1 (see FIG. 21) facing the venting unit 600 (see FIG. 21), and then be discharged through the venting unit 600. That is, the mesh part MP of the separation member 900e can guide the movement of gas or particles emitted from the battery cell.

Further, particles emitted from the battery cell may include high-temperature metal particles, and the high-temperature metal particles may cause an explosion or ignition while encountering the external oxygen. However, when the high-temperature metal particles pass through the mesh part MP, the temperature of the metal particles may be lowered when the high-temperature metal particles collide with the mesh part MP, which can prevent an explosion or ignition. In addition, since the mesh part MP is a porous structure, it may restrict the cooling material from flowing into the space S1 (see FIG. 21) facing the venting unit 600 (see FIG. 21). The mesh part MP according to the present embodiments may prevent gas generated from the battery cell 110 from leading to an explosion or ignition, and at the same time, restrict the overflow of the cooling material.

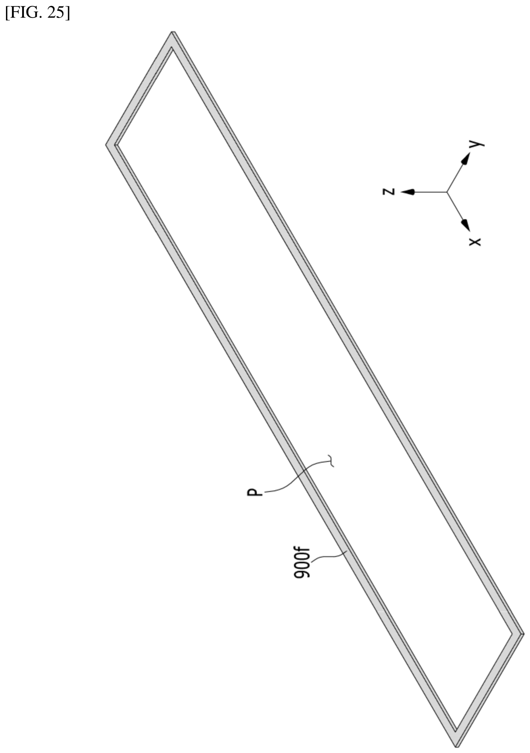

FIG. 25 is a perspective view showing a separation member according to certain other embodiments of the present disclosure.

Referring to FIG. 25, a separation member 900f according to certain other embodiments of the present disclosure may include an opening part P. This separation member 900f may be located between the battery cells 110 (see FIG. 21) and the venting unit 600 (see FIG. 21). Since the opening part P is formed in the separation member 900f, gas or particles generated in the battery cells 110 may be directly emitted into the space S1 facing the venting unit 600 through the opening part P, and may be immediately discharged to the outside through the venting unit 600.

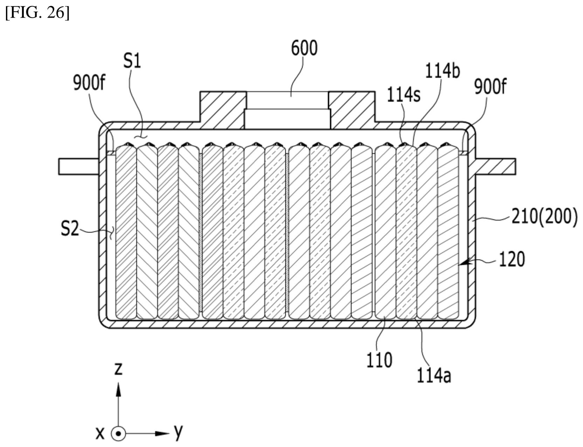

FIG. 26 is a cross-sectional view of a battery assembly to which the separation member of FIG. 25 is applied.

Referring to FIGS. 25 and 26 together, in a battery assembly according to certain other embodiments of the present disclosure, a separation member 900f into which battery cells 110 are fitted may be located inside a frame 200. In particular, FIG. 26 shows in cross-section that battery cells 110 are located inside a frame 200 while being fitted into a separating member 900f.

One side space of the separation member 900f may be a space S1 facing the venting unit 600, and the other side space of the separation member 900f may be a space S2 through which a cooling material flows. The space S2 through which a cooling material flows refers to a space through which a cooling material flowed into the frame 200 through the inflow port 510 flows while coming into contact with the battery cells 110.

The separation member 900f may be formed with an opening part P, and the battery cells 110 may be fitted into this opening part P. For example, a part of the upper area of the battery cells 110 may be fitted into the opening part P of the separation member 900f. Unlike the above-mentioned embodiments in which the separation member 900f having an opening part P formed thereon is located between the battery cells 110 (see FIG. 21) and the venting unit 600 (see FIG. 21), in the embodiment of FIG. 26, the separation member 900f may be located inside the frame 200 in a state in which the battery cells 110 are fitted into the opening part P of the separation member 900f.

Since the battery cells 110 are in the form that is fitted into the separation member 900f, one end of the battery cells 110 can be exposed to a space S1 facing the venting unit 600. For example, the upper end 114b of the battery cells 110 can be exposed to a space S1 facing the venting unit 600. Gas or particles generated in the battery cells 110 can be directly emitted into the space S1 facing the venting unit 600, and can be immediately discharged to the outside through the venting unit 600. At the same time, the separation member 900f can separate the space S1 facing the venting unit 600 from the space S2 through which the cooling material flows.

Therefore, the space where gas is discharged through the venting unit 600 and the space where the cooling material flows in contact with the battery cells 110 can be effectively distinguished and separated without any interference with the directional venting function. Thereby, the influence or interference between the directional venting path where gas generated in the battery cell 110 is discharged and the cooling material flowing in contact with the battery cell 110 can be minimized.

The battery assembly 100 and the battery pack 1000 including the same according to certain embodiments of the present disclosure can be applied to various external devices 2000. In certain embodiments shown in FIG. 19, an electric vehicle and a hybrid vehicle are shown as examples of such devices, but are not limited thereto. That is, the present disclosure can be applied to various devices that can use the battery assembly and the battery pack including the same. For example, it can be applied to transportation vehicles such as an electric bicycle and/or an energy storage system (ESS), which also fall within the scope of the present disclosure.

In the embodiments above, expressions indicating directions such as "front," "rear," "left," "right," "up," and "down" have been used. These expressions are used only to facilitate the description, and may vary, for example, depending on the location of a target object or an observer.

One or more battery assemblies according to certain embodiments of the present disclosure described above may be mounted together with various control and protection systems such as a battery management system (BMS), a battery disconnect unit (BDU), and a cooling system, to form a battery pack.

The battery assemblies or the battery pack may be applied to various devices, which include, for example, transportation vehicles such as electric bicycles, electric vehicles, and hybrids, and energy storage systems (ESS). However, without being limited thereto, the battery assemblies or the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery assembly
110: battery cell
120: battery cell stack
200: frame
210: main frame
400: end plate
510: inflow port
516: outflow port
600: venting unit

## Claims

1. A battery assembly comprising:
a plurality of battery cells;
a frame that houses the plurality of battery cells;
an inflow port and an outflow port for circulating a cooling material into the inside of the frame; and
a venting unit that is provided on one surface of the frame and discharges gas inside the frame when the pressure inside the frame is equal to or greater than a specified pressure,
wherein the cooling material flowed in through the inflow port directly cools the battery cells and is discharged through the outflow port.

2. The battery assembly according to claim 1,
wherein the operating pressure of the venting unit is 1.0 bar or more and 2.5 bar or less.

3. The battery assembly according to claim 1,
wherein the venting unit is provided on one surface of the frame, rather than at least one surface of the frame where the inflow port or the outport port is provided.

4. The battery assembly according to claim 1,
wherein the venting unit is provided on the upper surface of the frame.

5. The battery assembly according to claim 1,
wherein the venting unit is a rupture disc type that ruptures when the inner pressure of the frame is equal to or greater than a specified pressure, a reversible type that opens and closes based on a specified pressure inside the frame, or a valve type that opens when the inner pressure of the frame is equal to or greater than a specified pressure.

6. The battery assembly according to claim 1,
wherein the venting unit is mounted on an upper surface of the frame by a sealant, adhesive, bolt fastening, or welding.

7. The battery assembly according to claim 1,
wherein the battery cells are stacked to form a battery cell stack, and
the battery cell stack is housed in the frame.

8. The battery assembly according to claim 7,
wherein the frame comprises a main frame that covers at least a part including the upper surface of the battery cell stack and is opened on both opposing sides; and end plates that cover each of the opened both sides of the main frame, respectively.

9. The battery assembly according to claim 8,
wherein the venting unit is located on one surface of the main frame.

10. The battery assembly according to claim 8,
wherein the inflow port and the outflow port are located in one of the end plates or each of the end plates.

11. The battery assembly according to claim 1,
wherein the battery cell has a sealing part, and
at least a part of the sealing part is provided on the battery cell portion facing the venting unit among the battery cells.

12. The battery assembly according to claim 1,
wherein a separation member is located between the battery cells and the venting unit.

13. The battery assembly according to claim 12,
wherein one side space of the separation member is a space facing the venting unit, and the other side space of the separation member is a space through which the cooling material flows.

14. The battery assembly according to claim 12,
wherein at least a part of the separation member is ruptured when a pressure equal to or greater than a specified level is applied.

15. The battery assembly according to claim 12,
wherein in order to form a portion that ruptures when a pressure equal to or greater than a specified level is applied, a notch, a boundary portion having a thickness difference, or a plurality of holes are formed in the separation member.

16. The battery assembly according to claim 12,
wherein the separation member comprises a mesh part.

17. The battery assembly according to claim 12,
wherein the separation member comprises an opening part.

18. The battery assembly according to claim 1,
wherein a separation member into which the battery cells are fitted is located inside the frame.

19. The battery assembly according to claim 18,
wherein one side space of the separation member is a space facing the venting unit, and the other side space of the separation member is a space through which the cooling material flows.

20. The battery assembly according to claim 1,
wherein cooling lines are connected to the inflow port and the outflow port, respectively, and
a venting valve is disposed on at least one of the cooling lines.

21. The battery assembly according to claim 20,
wherein the venting valve discharges gas from the cooling lines when the pressure of the cooling line reaches a predetermined pressure.

22. A battery pack comprising:
at least one battery assembly according to claim 1;
a pack frame that houses the battery assembly and has an opened upper part; and
a pack cover that covers the opened upper part of the pack frame,
wherein the pack cover is spaced apart from the venting unit so as to have a predetermined venting space between the venting unit and the pack cover.

23. The battery pack according to claim 22,
wherein in the venting space, a distance between the venting unit and the pack cover is 5 mm or more and 25 mm or less.
